# EUROPÄISCHE PATENTSCHRIFT

(11) **EP 4 375 092 B1**
(45) Veröffentlichungstag und Bekanntmachung des Hinweises auf die Patenterteilung: **04.12.2024**
(21) Anmeldenummer: 22209281.9
(22) Anmeldetag: 24.11.2022
(51) Int. Cl.: B60C 23/00, F16K 31/122, F16K 15/20

(54) **REIFENDRUCKVENTILBAUGRUPPE UND GRUPPE MIT REIFENDRUCKVENTILBAUGRUPPEN**
TIRE PRESSURE VALVE ASSEMBLY AND ASSEMBLY COMPRISING TIRE PRESSURE VALVE ASSEMBLIES
ENSEMBLE VALVE DE PRESSION DE PNEU ET GROUPE COMPRENANT DES ENSEMBLES VALVE DE PRESSION DE PNEU

(43) Veröffentlichungstag der Anmeldung: 29.05.2024
(73) Patentinhaber: Schulte, Reinhold, 33106 Paderborn (DE)
(72) Erfinder: Schulte, Reinhold, 33106 Paderborn (DE)
(74) Vertreter: REHBERG HÜPPE + PARTNER

(56) Entgegenhaltungen:
- WO-A1-2022/035497
- DE-A1- 102014 007 281
- JP-A- H05 246 218

## Beschreibung

### TECHNISCHES GEBIET DER ERFINDUNG

In Nutzfahrzeugen dienen Reifendruckregelanlagen (worunter im Folgenden auch Reifendrucksteueranlagen subsummiert werden) der Herbeiführung und Aufrechterhaltung des gewünschten Drucks in den Reifen. Die Reifendruckregelanlagen verfügen zu diesem Zweck über mit dem Reifen rotierende, insbesondere an einer Felge montierte Reifendruckventilbaugruppen, über die in einer Sperrstellung der Reifen abgesperrt wird, in einer Belüftungsstellung dem Reifen Druck zugeführt wird und in einer Entlüftungsstellung der Reifen entlüftet wird. Für die Versorgung der Reifendruckventilbaugruppe mit Druckluft und die Ansteuerung der Reifendruckventilbaugruppe zur Herbeiführung der unterschiedlichen Schaltstellungen ist es bekannt, in einer zweikreisigen Reifendruckregelanlage die Reifendruckventilbaugruppe mit einem Steuerkreis und einem Versorgungskreis zu verbinden. Der Versorgungskreis stellt dabei die Druckluft zum Befüllen des Reifens zur Verfügung, während der Steuerkreis der Zufuhr eines Steuerdruckes dient, um die Reifendruckventilbaugruppe in die unterschiedlichen Schaltzustände zu überführen. Bekannt sind auch einkreisige Reifendruckregelanlagen, bei denen die Druckluft in dem einzigen Kreis einerseits der Versorgung der Reifendruckventilbaugruppe mit Druckluft und damit dem Befüllen des Reifens dient, während andererseits die Druckhöhe in dem Kreis als Steuerdruck zur Umschaltung der Reifendruckventilbaugruppe in die unterschiedlichen Schaltzustände genutzt wird. Da die Druckluftversorgung der Reifendruckregelanlage fahrzeugfest angeordnet ist und auch etwaige pneumatische Komponenten zur Aufbereitung der Drücke in dem mindestens einen Kreis fahrzeugfest angeordnet sind, sind die beiden Kreise der zweikreisigen Reifendruckregelanlage oder der eine Kreis der einkreisigen Reifendruckregelanlage über eine relative Verdrehung ermöglichende Drehdurchführung mit der Reifendruckventilbaugruppe und der Felge des Reifens verbunden. Mit der Reifendruckregelanlage kann auch gezielt eine Veränderung des Druckes in den Reifen erfolgen. Dies ist beispielsweise vorteilhaft für die Veränderung des Druckes je nach Beschaffenheit der Fahrbahn, wobei beispielsweise für eine harte und glatte Fahrbahn ein höherer Druck in dem Reifen genutzt werden kann als bei einem raueren und/oder weicheren Untergrund, beispielsweise auf einer Schotterstraße oder einer Straße mit Sand oder einem Ackerboden.

### STAND DER TECHNIK

DE 2 141 087 A1 offenbart eine einkreisige Reifendruckregelanlage, bei der der Druck in dem einzigen Kreis über ein manuell mittels eines Handgriffes betätigtes Ventil vorgegeben werden kann, welches je nach Stellung des Handgriffes in eine Belüftungsstellung, Sperrstellung und Entlüftungsstellung gebracht werden kann. Der Kreis ist über eine Drehdurchführung mit einem zugeordneten Fahrzeugrad verbunden. Zum Füllen eines Reifens wird der Handgriff des Einstellventils aus der Entlüftungsstellung in die Belüftungsstellung überführt, womit die an der Felge gehaltene Ventileinrichtung derart geöffnet wird, dass Druckluft aus dem Kreis in den Reifen gelangt. Nach Beendigung des Füllvorganges des Fahrzeugreifens wird der Handgriff in seine Ausgangslage zurückgestellt, womit der Kreis entlüftet wird. In der Entlüftungsstellung sperrt die Ventileinrichtung den Reifen ab. Da in diesem Fall der Kreis drucklos ist, sind die Dichtungen der Drehdurchführung mit keinem Druck beaufschlagt, was zu einer geringen Reibung und einem geringen Verschleiß führt. Soll dann (bspw. nach einem Entladen des Fahrzeuges oder bei einem Wechsel von einer harten Straßenunterlage auf ein Gelände mit weichem Boden) der Reifendruck gesenkt werden, wird das Einstellventil nochmals manuell in die Belüftungsstellung gebracht, was dann zur Entlüftung des Reifens in die Atmosphäre durch die radseitige Ventileinrichtung führt. Das Einstellventil kann auch als gestuftes Ventil ausgebildet sein, welches in einer Schaltstellung den Kreis entlüftet, in einer Schaltstellung einen Reifen-Mindestdruck in dem Kreis erzeugt sowie in einer Schaltstellung einen Reifen-Höchstdruck in dem Kreis erzeugt.

WO 2008/068599 A2 offenbart eine elektronische einkreisige Reifendruckregelanlage, in der sämtliche Reifen mit einer Zentralleitung verbunden werden können, die zum Erhöhen des Druck in den Reifen mit einem Kompressor und/oder einem Druckluftbehälter verbunden werden kann sowie zum Entlüften der Reifen mit der Atmosphäre verbunden werden kann. Fahrzeugseitig von der Drehdurchführung ist jedem Reifen ein elektronisch gesteuertes Be- und Entlüftungsventil vorgeordnet, während reifenseitig der Drehdurchführung ein elektromagnetisch gesteuertes Sperrventil angeordnet ist. In der Sperrstellung des Sperrventils wird ein einmal herbeigeführter Druck in dem Reifen aufrecht erhalten, während in der Durchlassstellung des Sperrventils je nach Schaltstellung des fahrzeugseitigen Be- und Entlüftungsventils eine Be- oder Entlüftung des Reifens erfolgen kann.

In der elektronischen Reifendruckregelanlage gemäß DE 10 2007 036 201 A1 kommuniziert eine elektronische Steuereinrichtung drahtlos mit einem in einem Reifen angeordneten Drucksensor. Der einzige Kreis zum Betrieb einer dem Fahrzeugrad zugeordneten Ventileinrichtung wird hier zum Sperren der Ventileinrichtung und damit Aufrechterhaltung des Drucks in dem Reifen entlüftet. Zum Überführen der Ventileinrichtung in eine Belüftungsstellung wird in den Kreis elektronisch ein erster Druck eingesteuert, während zum Überführen der Ventileinrichtung in eine Entlüftungsstellung ein zweiter Druck in den Kreis eingesteuert wird, der größer ist als der erste Druck.

Hingegen offenbart die Druckschrift EP 2 308 698 B1, die den nächstliegenden Stand der Technik bildet, eine elektronisch gesteuerte einkreisige Reifendruckregelanlage, bei der für einen niedrigen Druck unterhalb eines Schwellwertes die Ventileinrichtung gesperrt ist, für einen ersten Druck in dem Kreis die Ventileinrichtung in eine Entlüftungsstellung überführt wird und für einen zweiten Druck in dem Kreis, der größer ist als der erste Druck, die Ventileinrichtung in eine Belüftungsstellung überführt wird.

An Agrarfahrzeug-Reifendrucksteueranlagen werden insbesondere die folgenden Anforderungen gestellt:
- Eine Agrarfahrzeug-Reifendrucksteueranlage soll einen vorbestimmten Druck in mindestens einem Reifen aufrechterhalten. Dies kann ein Absperren der pneumatischen Verbindung zu dem Reifen durch die Agrarfahrzeug-Reifendrucksteueranlage erfordern. Die Agrarfahrzeug-Reifendrucksteueranlage kann des Weiteren für eine etwaige schleichende Leckage in dem Reifen ein Belüften zum Nachfüllen vornehmen. Bei einer Erwärmung der Luft in dem Reifen kann des Weiteren zum Konstanthalten des Drucks in demselben eine Entlüftung des Reifens durch die Agrarfahrzeug-Reifendrucksteueranlage erforderlich sein. Möglich ist auch, dass abhängig von der Beladung des Agrarfahrzeugs eine beladungsabhängige Druckänderung durch die Agrarfahrzeug-Reifendrucksteueranlage kompensiert werden muss.
- Agrarfahrzeug-Reifendrucksteueranlagen können eingesetzt werden, um durch Modifikation des Drucks in dem Reifen Betriebsbedingungen des Agrarfahrzeugs und insbesondere den Kontaktbedingungen des Reifens mit dem Boden Rechnung tragen. So ist es beispielsweise bekannt, einen Druck in einem Reifen über eine Agrarfahrzeug-Reifendrucksteueranlage zu reduzieren, wenn sich ein unerwünschter Schlupf des Reifens gegenüber dem Boden ergibt. Möglich ist auch, dass bei der Erkennung einer unerwünschten Neigung des Agrarfahrzeugs (da beispielsweise das Agrarfahrzeug auf einem unebenen Boden oder an einem Hang steht) durch Veränderung der Drücke an Reifen einer Achse oder einer Fahrzeugseite der Schrägstellung des Agrarfahrzeugs entgegengewirkt wird. DE 10 2011 085 040 A1 offenbart ein Agrar-Zugfahrzeug mit einer Agrarfahrzeug-Reifendrucksteueranlage, bei der der Reifendruck in Abhängigkeit von einem Schlupf der Reifen auf dem Boden geregelt wird. Alternativ oder zusätzlich kann die Regelung für den Druck des Reifens in Abhängigkeit von der Zugkraft des Agrar-Zugfahrzeugs und/oder der Arbeitstiefe eines Werkzeugs oder Anbaugeräts des Agrar-Zugfahrzeugs erfolgen. Ergänzende, in die Regelung des Drucks des Reifens einfließende Regelungskriterien können die Fahrgeschwindigkeit sein, eine Eingabe des Fahrers, die Reifenart, die Bodenart, die Bodenbeschaffenheit und/oder die Achslastverteilung.
- Bewegt sich das Agrarfahrzeug im öffentlichen Straßenverkehr, bedingen ein niedriger Kraftfahrzeugverbrauch, Vorschriften des Herstellers und gesetzliche Vorgaben und die dynamische Fahrstabilität einen verhältnismäßig hohen Druck in den Reifen. Hingegen kann bei dem Überfahren eines Ackerbodens durch das Agrarfahrzeug ein verringerter Druck in den Reifen gewünscht sein, um die Kontaktfläche des Reifens mit dem Ackerboden zu vergrößern, womit sich verringerte Flächenpressungen für die Anpressung des Reifens an den Ackerboden ergeben, die die Gefahr einer unerwünschten Verdichtung des Ackerbodens zumindest mindert. Bei einem Wechsel des Betriebs des Agrarfahrzeugs von der Fahrt im Straßenverkehr zu der Fahrt über einen Ackerboden (und umgekehrt) muss die Agrarfahrzeug-Reifendrucksteueranlage die erforderlichen Druckänderungen in den Reifen gewährleisten

EP 1 435 302 A1 offenbart eine grundsätzlich geschlossene einkreisige Fahrzeug-Reifendrucksteueranlage, die befüllt werden kann, indem mittels eines Kompressors Luft aus der Umgebung über einen Filter angesaugt wird. Der Kompressor fördert dabei die Luft einerseits zu einem Vorratsbehälter und andererseits über ein zentrales 3/2-Wegeventil zu einer Zentralleitung.

Die Zentralleitung verzweigt über Zweigleitungen zu den Reifen des Nutzfahrzeugs. In den Zweigleitungen ist jeweils ein 3/2-Wege-Achsventil und ein als 2/2-Wege-Sperrventil ausgebildetes Reifenventil dem zugeordneten Reifen vorgeordnet. Hierbei sind die 3/2-Wege-Achsventile am Fahrzeugrahmen befestigt, während die Reifenventile an dem Fahrzeugrad gehalten sind und mit diesem rotieren. Das 3/2-Wege-Achsventil und das Reifenventil sind über eine Drehdurchführung verlaufende Verbindungsleitung miteinander verbunden, wobei die Druckluft in der Verbindungsleitung sowohl als Versorgungsdruck für das Reifenventil als auch als pneumatischer Steuerdruck des Reifenventils verwendet wird. Ist der Druck in dem Vorratsbehälter größer als der Druck in dem Reifen, kann ohne Betrieb des Kompressors eine Befüllung des Reifens erfolgen. Andernfalls wird die Druckluft aus dem Vorratsbehälter über den Kompressor weiter verdichtet und zur Befüllung mindestens einem Reifen zugeführt. Schließlich ist auch eine Befüllung eines Reifens möglich, indem dem Reifen aus der Umgebung angesaugte und mittels des Kompressors verdichtete Druckluft zugeführt wird. Hingegen kann für eine Entlüftung eines Reifens der Reifen mit einer Saugseite des Kompressors verbunden werden, wobei in diesem Fall die von dem Kompressor aus dem Reifen abgesaugte Druckluft entweder unter Verdichtung durch den Kompressor dem Vorratsbehälter zugeführt werden kann oder in die Atmosphäre entlüftet werden kann. Mit dem Fahrzeugrad rotiert eine reifeninnere Einheit, die neben dem Reifenventil und einer Drossel einen Drucksensor, einen Temperatursensor und eine Sendeeinrichtung aufweist. Mittels der Sendeeinrichtung kann per Funk ein Drucksignal und/oder Temperatursignal an eine Empfangseinrichtung einer elektronischen Steuereinheit übertragen werden, die die Fahrzeug-Reifendrucksteueranlage steuert.

WO 2017/116628 A1 betrifft eine zweikreisige Agrarfahrzeug-Reifendrucksteueranlage, die ein schnelles Be- und Entlüften eines großvolumigen Reifens eines Traktors für einen Wechsel von einer Fahrt über eine Ackerfläche einerseits und einer Fahrt auf einer Straße andererseits (und umgekehrt) ermöglichen soll. Der Traktor verfügt über einen Kompressor, mittels dessen ein Haupt-Vorratsbehälter und mehrere Hilfs-Vorratsbehälter befüllt werden können. Eine Versorgungsleitung der Agrarfahrzeug-Reifendrucksteueranlage kann wahlweise aus dem Haupt-Vorratsbehälter oder den Hilfs-Vorratsbehältern mit Druckluft versorgt werden. Die Versorgungsleitung verzweigt in Zweigleitungen, die jeweils mit einem zugeordneten Reifen verbunden sind. In den Zweigleitungen sind jeweils automatisch betätigbare Belüftungsventile angeordnet und an diese ist jeweils ein Entlüftungsventil angeschlossen, wodurch eine Be- und Entlüftung der Reifen möglich ist. Ein Drucksensor erfasst den Druck in dem Haupt-Vorratsbehälter. Des Weiteren können die Fahrzeugräder jeweils Drucksensoren aufweisen, die den Druck in dem Reifen erfassen. Eine Übertragung des Drucksignals erfolgt drahtlos. Die Be- und Entlüftungsventile sind vor einer Drehdurchführung des Fahrzeugrades angeordnet. Zwischen die Drehdurchführungen und den Innenraum des Reifens sind pneumatisch gesteuerte Belüftungsventile zwischengeordnet, die mit zwei separaten pneumatischen Pfaden der Drehdurchführungen verbunden sind, über die einerseits ein Versorgungsdruck und andererseits ein Steuerdruck an das pneumatisch gesteuerte Belüftungsventil übertragen werden. Das in das Fahrzeugrad integrierte pneumatisch gesteuerte Belüftungsventil ist hierbei als 2/2-Wegeventil oder Sperrventil ausgestaltet, sodass dieses in einer Öffnungsstellung die Belüftung und Entlüftung durch die an dem Fahrzeugrahmen gehaltenen Be- und Entlüftungsventile ermöglicht, während das pneumatisch gesteuerte Belüftungsventil in der Sperrstellung den Innenraum des Reifens absperrt. Das in der Zweigleitung angeordnete Belüftungsventil und das Entlüftungsventil können als Magnetventile ausgebildet sein. Anstelle separat ausgebildeter Be- und Entlüftungsventile kann auch ein 3/3-Wegeventil eingesetzt sein, welches eine Sperrstellung, eine Belüftungsstellung und eine Entlüftungsstellung aufweist. Der pneumatische Steuerkreis zur Ansteuerung der in das Fahrzeugrad integrierten Sperrventile ist in WO 2017/116628 A1 weder weiter beschrieben noch dargestellt. Ein Befüllen mindestens eines Reifens erfolgt gemäß WO 2017/116628 A1, indem zunächst ein schnelles Befüllen ermöglicht wird, indem der mindestens eine Reifen mit dem Haupt-Vorratsbehälter und den Hilfsvorratsbehältern verbunden wird. Ist ein Druckausgleich erfolgt, kann eine weitere Druckerhöhung in dem Reifen erfolgen, indem die Hilfs-Vorratsbehälter gegenüber dem Kompressor abgesperrt werden und durch Betrieb des Kompressors über den Haupt-Vorratsbehälter der Druck in dem mindestens einen Reifen erhöht wird. Eine Entlüftung der Reifen erfolgt durch die Entlüftungsventile unmittelbar in die Umgebung. Neben der Steuerung der Ventile über eine elektronische Steuereinrichtung kann auch eine manuelle Steuerung durch den Benutzer erfolgen.

EP 0 365 953 A2 betrifft eine Reifendrucksteueranlage für eine geländegängiges Fahrzeug, bei welchem ebenfalls eine schnelle Veränderung des Drucks in einem Reifen für einen Wechsel zwischen der Fahrt auf der Straße und der Fahrt in tiefem Gelände ermöglicht werden soll. In der Reifendrucksteueranlage wird der Druck eines Vorratsbehälters über ein Relaisventil, welches über Feinregelventile und 3/2-Magnetventile angesteuert wird, umgewandelt in einen Druck in einer ausgangsseitigen Versorgungsleitung, der entweder dem Reifendruck für den Betrieb auf einer Straße oder dem Reifendruck für einen Betrieb in tiefem Gelände entspricht. Die Versorgungsleitung ist über einen Eingang eines Wechselventils, ein Radabsperrventil in Ausgestaltung als Be- und Entlüftungsventil, eine Drehdurchführung und ein Schnelllöseventil und ein nachgeschaltetes Radsteuerventil in Ausgestaltung als pneumatisch gesteuertes Sperrventil mit einem Reifen verbunden. Das Schnelllöseventil und das Radsteuerventil rotieren mit dem Fahrzeugrad. Das Radsteuerventil kann einerseits über einen Druckimpuls auf der Versorgungsleitung geöffnet werden und andererseits über einen Schließdruck in einer Steuerleitung zu jedem beliebigen Zeitpunkt und bei jeder beliebigen Druckhöhe geschlossen werden. Der Druck in der Steuerleitung wird dabei mittels eines elektronisch gesteuerten Schließdruckventils vorgegeben. Das Schließdruckventil kann vom Fahrzeugführer und einer elektronische Steuereinrichtung elektrisch betätigt werden. Die Steuerleitung verläuft ebenfalls über die Drehdurchführung. Um zu vermeiden, dass bei der Reifendrucksteueranlage der Druck in dem Reifen den Sollwert nicht oder nur sehr langsam erreicht (beispielsweise weil der zu befüllende Reifen einen Defekt hat oder weil die Kompressorleistung nicht ausreicht), ein Schließdruck-Signal des Schließdruckventils sehr spät erzeugt würde oder ganz ausbleiben würde mit der Folge, dass an der Drehdurchführung ständig ein Druck anstehen würde und die Dichtungen der Drehdurchführung schnell verschleißen, schlägt EP 0 365 953 A2 vor, dem Relaisventil einen Doppeldruckschalter nachzuordnen, dessen beide Schaltpunkte um eine ausreichende Sicherheitsmarge unter den Sollwerten des Drucks für die Fahrt auf der Straße und in tiefem Gelände liegen. Sind die Druckwerte des Doppeldruckschalters erreicht, wird eine Zeitverzögerung aktiviert, nach deren Ablauf das Schließdruckventil zwangsweise betätigt wird, was die Schließung des Radsteuerventils zur Folge hat und damit auch die Entlüftung der Versorgungsleitung und die Entlastung der Drehdurchführung.

EP 3 354 488 A1 offenbart eine zweikreisige Reifendrucksteueranlage für ein Offroad-Fahrzeug, bei der den Reifen vorgeordnete und mit den Fahrzeugrädern rotierende Sperrventile über Drehdurchführungen sowohl mit einem Versorgungsdruck als auch mit einem pneumatischen Steuerdruck beaufschlagt werden. Hierbei wird der Steuerdruck durch ein zentrales Magnetventil für sämtliche Reifen vorgegeben, während über unabhängige Magnetventile der Versorgungsdruck für einer Achse zugeordnete Reifen individuell vorgegeben werden kann. Alternativ schlägt EP 3 354 488 A1 vor, als mit den Fahrzeugrädern rotierende Sperrventile elektronisch gesteuerte 2/2-Wegeventile einzusetzen, wobei in diesem Fall über die Drehdurchführung einerseits der Versorgungsdruck und andererseits ein elektrisches Steuersignal übertragen werden.

Weiterer Stand der Technik ist insbesondere aus den Druckschriften DE 10 2014 007281 A1, WO 2022/035497 A1, JP H05 246218 A, EP 3 904 126 A1, EP 1 051 302 B1, EP 3 703 321 B1 und EP 3 401 129 B1 bekannt.

### AUFGABE DER ERFINDUNG

Der Erfindung liegt die Aufgabe zugrunde, eine Reifendruckventilbaugruppe und eine Gruppe von Reifendruckventilbaugruppen vorzuschlagen, die
- eine multifunktionale Verwendung von Komponenten ermöglicht und/oder
- zu einer Erhöhung der Betriebssicherheit führt und/oder
- verringerte Anforderungen an die Gewährleistung und Aufrechterhaltung der erforderlichen Umschaltdrücke ermöglicht und/oder
- eine Vereinfachung und/oder Verbesserung der konstruktiven Gestaltung ermöglicht.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung betrifft eine einkreisige Reifendruckventilbaugruppe, die einen Steuer- und Versorgungskanal und ein Reifendruckventil aufweist.

Das Reifendruckventil weist einen Steuereinlass auf, der über eine Verzweigung und einen Steuerzweig mit dem Steuer- und Versorgungskanal verbunden ist. Des weiteren weist das Reifendruckventil einen Versorgungseinlass auf, der über die Verzweigung und einen Versorgungszweig mit dem Steuer- und Versorgungskanal verbunden ist. Das Reifendruckventil weist auch einen Entlüftungsauslass und einen Reifenanschluss auf.

In einer ersten Schaltstellung sperrt das Reifendruckventil den Reifenanschluss ab, so dass das Druckluftvolumen in den Reifen konstant gehalten wird. Das Reifendruckventil weist auch eine zweite Schaltstellung auf. In der zweiten Schaltstellung verbindet das Reifendruckventil den Reifenanschluss mit dem Entlüftungsauslass. Somit kann Druckluft aus dem Reifen der Entlüftung zugeführt werden. Das Reifendruckventil verfügt des weiteren über eine dritte Schaltstellung. In der dritten Schaltstellung verbindet das Reifendruckventil den Reifenanschluss mit dem Versorgungseinlass, womit Druckluft von dem Versorgungseinlass dem Reifen zugeführt werden kann.

Das Reifendruckventil verfügt über eine Schaltcharakteristik derart, das bei einem zumindest temporären Druck an dem Steuer- und Versorgungskanal, der kleiner ist als erster Schwellwert, die erste Schaltstellung eingenommen wird. Ist hingegen der Druck an dem Steuer- und Versorgungskanal größer als der erste Schwellwert und kleiner als ein zweiter Schwellwert, wird das Reifendruckventil von der ersten Schaltstellung in die zweite Schaltstellung überführt. Ist schließlich der Druck an dem Steuer- und Versorgungskanal größer als der zweite Schwellwert, wird das Reifendruckventil von der ersten Schaltstellung oder der zweiten Schaltstellung in die dritte Schaltstellung überführt.

Insoweit kann die Reifendruckventilbaugruppe und das hierbei eingesetzte Reifendruckventil grundsätzlich entsprechend der eingangs genannten Druckschrift EP 2 308 698 B1 ausgebildet sein.

Die Erfindung beruht insbesondere auf der Erkenntnis, dass Druckschwankungen an dem Steuer-und Versorgungskanal der Reifendruckventilbaugruppe zu unerwünschten Veränderungen der Schaltstellungen des Reifendruckventils führen können, die dann zu einem unerwünschten Belüften, Entlüften oder Absperren des Reifens führen können, was bspw. einen Be- oder Entlüftungsvorgang des Reifens verzögern kann oder zu unerwünschten Traktionsverhältnissen des Reifens und/oder unerwünschten dynamischen Fahrzuständen des Fahrzeugs führen kann.

Erfindungsgemäß wird vorgeschlagen, dass die Reifendruckventilbaugruppe eine Selbsthaltefunktion aufweist. Als Selbsthaltefunktion wird dabei eine Funktion verstanden, die gewährleistet, dass eine Schaltstellung, die durch einen Schaltdruck an dem Steuer- und Versorgungskanal herbeigeführt worden ist, auch aufrechterhalten wird, wenn der Druck an dem Steuer- und Versorgungskanal kurzzeitig, für eine vorbestimmte Zeitspanne oder auch dauerhaft unter den Schaltdruck fällt. Hierbei kann die Selbsthaltefunktion derart sein, dass die Schaltstellung aufrechterhalten wird, solange der Druck um eine vorgegebenen Druckspanne unterhalb des Schaltdrucks liegt.

Die erfindungsgemäße Selbsthaltefunktion ist dabei eine passive Selbsthaltefunktion, so dass diese nicht unmittelbar mittels elektronischer Steuerung herbeigeführt wird, sondern durch die Druckverhältnisse an und in der Reifendruckventilbaugruppe, insbesondere an dem Steuereinlass und dem Versorgungseinlass des Reifendruckventils und/oder dem Steuer- und Versorgungskanal. Möglich ist dabei, dass die Reifendruckventilbaugruppe insgesamt als passives Ventil ausgebildet ist, so dass diese keine elektronische Steuereinheit, keinen elektronischen Steueranschluss und keine Magnetventile aufweist.

Erfindungsgemäß wird die Selbsthaltefunktion durch ein Selbsthalteventil gewährleistet. Das Selbsthalteventil trägt dabei dafür Sorge, dass nach Überführung des Reifendruckventils in dritte Schaltstellung die dritte Schaltstellung auch beibehalten wird, wenn der Druck an dem Steuer- und Versorgungskanal temporär unter den zweiten Stellwert (aber u. U. maximal um eine vorgegebenen Druckspanne) fällt.

Für die Art der Ausgestaltung des in der Reifendruckventilbaugruppe enthaltenen Selbsthalteventils gibt es im Rahmen der Erfindung vielfältige Möglichkeiten. Für eine konstruktive Ausgestaltung weist das Selbsthalteventil einen Selbsthalteventilkörper auf, der die passive Selbsthaltefunktion gewährleistet.

Die Verzweigung in der Reifendruckventilbaugruppe, über die der Steuer- und Versorgungskanal einerseits mit dem Steuerzweig und andererseits mit dem Versorgungszweig verbunden ist, kann an beliebiger Stelle der Reifendruckventilbaugruppe, insbesondere in dem Steuer- und Versorgungskanal angeordnet sein. Für einen Vorschlag ist die Verzweigung in den Selbsthalteventilkörper des Selbsthalteventils integriert, so dass der Selbsthalteventilkörper multifunktional eingesetzt ist.

Möglich ist im Rahmen der Erfindung, dass der Selbsthalteventilkörper mit einem Selbsthalteventilsitz zusammenwirkt. In einer Schließstellung des Selbsthalteventils liegt der Selbsthalteventilkörper an dem Selbsthalteventilsitz an, womit eine Absperrung des Selbsthalteventils erfolgt. In diesem Fall ist der Steuer- und Versorgungskanal ausschließlich über einen durch den Selbsthalteventilkörper verlaufenden Versorgungsteilzweig mit dem Versorgungseinlass des Reifendruckventils verbunden. Hingegen bilden der Selbsthalteventilkörper und der Selbsthalteventilsitz in der Öffnungsstellung des Selbsthalteventils einen Bypassquerschnitt aus. In der Öffnungsstellung des Selbsthalteventils kommt somit zu der Verbindung des Steuer-und Versorgungskanals über den durch den Selbsthalteventilkörper verlaufenden Versorgungsteilzweig mit dem Versorgungseinlass des Reifendruckventils eine zusätzliche Verbindung des Steuer- und Versorgungskanals über den Bypassquerschnitt mit dem Versorgungseinlass des Reifendruckventils hinzu. Auf diese Weise können in der Selbsthalteventil-Öffnungsstellung und damit in der Belüftungsstellung der Reifendruckventilbaugruppe vergrößerte Strömungsquerschnitt zum schnellen Befüllen des Reifens bereitgestellt werden.

Gemäß einem Vorschlag wirkt der an dem Steuer- und Versorgungskanal anliegenden Druck in der Schließstellung des Selbsthalteventils auf eine erste Steuerfläche des Selbsthalteventilkörpers ein. Hingegen wirkt der an dem Steuer- und Versorgungskanal anliegende Druck in der Öffnungsstellung des Selbsthalteventils auf eine zweite Steuerfläche ein. Dabei ist die erste Steuerfläche kleiner als die zweite Steuerfläche. Auf diese Weise kann die Selbsthaltefunktion in der Art einer Hysterese bereitgestellt werden.

Für eine erfindungsgemäße Ausgestaltung der Reifendruckventilbaugruppe ist das Selbsthalteventil sowohl mit einem Steuerzweig als auch mit einem Versorgungszweig verbunden. Dabei kann der Steuerzweig permanent über eine Drossel mit einer Entlüftung verbunden sein. In dem Steuerzweig wird in der Öffnungsstellung eines Sperrventils über das Selbsthalteventil dem Steuerzweig ein Sperrventil-Volumenstrom zugeführt. Dieser Sperrventil-Volumenstrom ist dann größer als der von dem Steuerzweig über die Drossel entlüftete Volumenstrom. Dies hat zur Folge, dass der in dem Steuerzweig aufgebaute Druck zur Umschaltung des Reifendruckventils in die zweite Schaltstellung genutzt werden kann. Hingegen wird in dem Steuerzweig in der Schließstellung des Sperrventils der Sperrventil-Volumenstrom derart reduziert, dass der Sperrventil-Volumenstrom kleiner ist als der über die Drossel entlüftete Volumenstrom. Auf diese Weise kann der in dem Steuerzweig reduzierte Druck zur Umschaltung des Reifendruckventils in die dritte Schaltstellung beitragen.

Für einen weiteren Vorschlag der Erfindung ist der Selbsthalteventilkörper zusätzlich zu einem weiteren Zweck eingesetzt: In diesem Fall tritt der Selbsthalteventilkörper des Selbsthalteventils einerseits mit dem Selbsthalteventilsitz in Wechselwirkung, um den Bypassquerschnitt zu sperren bzw. freizugeben. Andererseits tritt der Selbsthalteventilkörper auch mit einem Sperrventilsitz des Sperrventils in dem Steuerzweig in Wechselwirkung. Durch diese Multifunktionalität des Selbsthalteventilkörpers kann gewährleistet werden, dass zwingend die Sperrung und Freigabe des Bypassquerschnittes mit der Schaltstellung eines mit dem Selbsthalteventilkörper und dem Sperrventilsitz gebildeten Sperrventils korreliert. Hierbei ist das Sperrventil vorzugsweise für die Freigabe und Absperrung des zuvor genannten Sperrventil-Volumenstroms verantwortlich.

Weitere Ausgestaltungen der Erfindung betreffen die besondere Gestaltung des in der Reifendruckventilbaugruppe eingesetzten Reifendruckventils:
Für eine konstruktive Ausgestaltung des Reifendruckventils verfügt dieses über ein Entlüftungsventil und ein Überströmventil. Das Entlüftungsventil gewährleistet dabei die Entlüftung des Reifenanschlusses und damit des Reifens. Das Überströmventil weist vorzugsweise einen Öffnungs- oder Überströmdruck auf, für den das Überströmventil geöffnet wird. In dem Reifendruckventil ist das Entlüftungsventil dem Entlüftungsauslass vorgeordnet, während dem Reifenanschluss das Überströmventil vorgeordnet ist.

Vorzugsweise sind die Ventilkörper des Entlüftungsventils einerseits und des Überströmventils andererseits nicht unabhängig voneinander. Vielmehr können diesen für einen Vorschlag der Erfindung (zumindest über einen Teilhub) mechanisch miteinander gekoppelt sein. Dies ermöglicht, dass die Öffnung des Überströmventils nicht ausschließlich mittels der an dem Überströmventil anliegenden Drücken herbeigeführt werden kann. Vielmehr kann das Überströmventil auch mechanisch durch den Ventilkörper des Entlüftungsventils "aufgestoßen" werden. Im Extremfall kann das Überströmventil sogar geöffnet werden, wenn kein Druck auf den Versorgungseinlass aufgebracht wird, sondern lediglich ein das Entlüftungsventil betätigender Steuerkolben das Entlüftungsventil und über die mechanische Kopplung das Überströmventil öffnet. Dies ermöglicht die Entlüftungsstellung der Reifendruckventilbaugruppe.

Gemäß einem Vorschlag der Erfindung ist in dem Reifendruckventil der Ventilkörper des Entlüftungsventils über einen Steuerkolben betätigbar. Der Steuerkolben wird dann mit dem Steuerdruck an dem Steuereinlass beaufschlagt. Vorzugsweise ist der Ventilkörper des Entlüftungsventils entgegengesetzt zu der Wirkung des Steuerdrucks an dem Steuerkolben von dem Druck auf der Eingangsseite des Überströmventils beaufschlagt.

Für eine konstruktive Ausgestaltung des erfindungsgemäßen Reifendruckventils verfügt dieses über eine Gehäuse. Das Gehäuse weist den Steuereinlass, den Entlüftungsauslass, den Versorgungseinlass und den Reifenanschluss sowie eine Ventilkammer auf. Das Überströmventil ist mit seinem Überströmventilkörper in dem Gehäuse angeordnet. Das Überströmventil trennt in einer Sperrstellung des Überströmventilkörpers die Ventilkörper von dem Reifenanschluss, so dass der Druck in dem Reifen konstant gehalten wird. Hingegen verbindet das Überströmventil in einer Öffnungsstellung des Überströmventilkörpers die Ventilkammer mit dem Reifenanschluss. Je nachdem, ob die Ventilkammer dann mit dem Entlüftungsauslass oder dem Versorgungseinlass verbunden ist, kann in dieser Öffnungsstellung des Überströmventilkörpers dann die Entlüftung oder Belüftung des Reifens erfolgen. Für diese konstruktive Ausgestaltung ist auch das Entlüftungsventil mit seinem Entlüftungsventilkörper in dem Gehäuse angeordnet. In einer Entlüftungsstellung des Entlüftungsventilkörpers verbindet das Entlüftungsventil die Ventilkammer mit dem Entlüftungsauslass. Hingegen trennt das Entlüftungsventil in einer Sperrstellung des Entlüftungsventilkörpers die Ventilkammer von dem Entlüftungsauslass. In dem Gehäuse ist auch der Steuerkolben angeordnet. Der Steuerkolben kann dabei fest mit dem Entlüftungsventilkörper verbunden sein oder integraler Bestandteil desselben sein. Der Steuerkolben ist mechanisch derart mit dem Überströmventilkörper gekoppelt, dass in Abhängigkeit von dem Druck an dem Steuereinlass und dem Druck in der Ventilkammer der Überströmventilkörper aus der Sperrstellung in die Öffnungsstellung überführt werden kann.

Die zuvor erläuterte mechanische Kopplung des Steuerkolbens oder Entlüftungsventilkörpers mit dem Überströmventilkörper kann dabei permanent, also über den gesamten Hub der Ventilkörper des Reifendruckventils bestehen. Vorzugsweise erfolgt diese Kopplung aber mit einem Spiel derart, dass die mechanische Kopplung erst dann herbeigeführt wird, wenn der Steuerkolben und der Entlüftungsventilkörper einen Teilhub ausgeführt haben. Vorzugsweise entspricht dieser Teilhub dem Hub des Reifendruckventils von der ersten Schaltstellung in die zweite Schaltstellung.

Ein weiterer Aspekt der Erfindung widmet sich der Kopplung des Reifendruckventils mit anderen pneumatischen Komponenten der Reifendruckventilbaugruppe. Möglich ist dabei, dass das Reifendruckventil grundsätzlich separat von den anderen Komponenten angeordnet ist und über pneumatische Leitungen mit diesen verbunden ist. Möglich ist auch, dass das Reifendruckventil an mindestens eine andere Komponente angeflanscht ist, wobei mittels der Flanschverbindung dann auch eine pneumatische Verbindung des Reifendruckventils mit der angeflanschten Komponente erfolgen kann. Für einen besonderen Vorschlag der Erfindung bildet das Gehäuse des Reifendruckventils im Umgebungsbereich des Versorgungseinlasses und/oder des Steuereinlasses eine Dicht- und Montagefläche aus. Diese kann beispielsweise einen kreisförmigen Querschnitt aufweisen, insbesondere zylindrisch mit einem Durchmesser oder abgestuft mit unterschiedlichen Durchmessern ausgebildet sein. Die Dicht- und Montagefläche kann dabei Dichtbereiche ausbilden, die beispielsweise als umlaufenden Dichtnuten ausgebildet sein kann, in denen auf beiden Seiten von dem Versorgungseinlass oder Steuereinlass dann Dichtringe zur Abdichtung angeordnet sein können. Über die Dicht- und Montagefläche kann das Reifendruckregelventil unter Abdichtung mit einem Dicht- und Montagauge eines Anschlussgehäuses einer anderen Komponente der Reifendruckventilbaugruppe montiert werden. Im einfachsten Fall wird das Anschlussgehäuse mit dem Dicht- und Montageauge so auf die zylindrische Dicht- und Montagefläche des Gehäuses des Reifendruckventils aufgesteckt, dass dieses die Dicht- und Montagefläche mit den Dichtbereichen umgibt. Dies kann somit durch axiales Fügen des Anschlussgehäuses auf die Dicht- und Montagefläche in Richtung der Längsachse der zylindrischen Dicht- und Montagefläche erfolgen. Erfolgt dann eine Sicherung der gefügten Stellung gegenüber einer Demontage in eine entgegensetzte axiale Richtung, ist eine besonders einfache, die Dichtigkeit gewährleistende und zuverlässige Einheit aus dem Reifendruckventil und dem Anschlussgehäuse der anderen pneumatischen Komponente gebildet.

Für eine weitere Ausgestaltung des Reifendruckventils ist der Steuerkolben über einer Steuerkolbenfeder abgestützt. Hierbei kann der nicht an dem Steuerkolben abgestützte Federfußpunkt der Steuerkolbenfeder an dem Gehäuse des Reifendruckventils abgestützt sein. Möglich ist aber auch, dass in einen Innenraum oder Innenbohrung des Gehäuses ein Gehäuseeinsatz eingesetzt ist, an dem dann die Steuerkolbenfeder abgestützt sein kann. Die Steuerkolbenfeder beaufschlagt dabei vorzugsweise den Steuerkolben in eine Richtung entgegengesetzt zur Beaufschlagung des Steuerkolbens mit dem Druck an dem Steuereinlass.

Möglich ist hierbei, dass der Gehäuseeinsatz multifunktional genutzt ist, indem dieser zusätzlich zu der Abstützung des Federfußpunktes der Steuerkolbenfeder auch einen Entlüftungsventilsitz des Entlüftungsventils ausbildet. An diesem Entlüftungsventilsitz des Gehäuseeinsatzes kann dann der Entlüftungsventilkörper des Entlüftungsventils in der Sperrstellung des Entlüftungsventils unter Abdichtung zur Anlage kommen.

Möglich ist auch, dass der Überströmventilkörper über eine Überströmventilfeder abgestützt ist, wobei dann eine Federfußpunkt der Überströmventilfeder an dem Gehäuse abgestützt sein kann.

Für die Gestaltung des Steuereinlasses gibt es vielfältige Möglichkeiten. So kann der Steuereinlass unmittelbar von einem Steueranschluss ausgebildet sein, an den eine Steuerleitung angeschlossen werden kann, beispielsweise unter Einsatz grundsätzlich bekannter Fittinge. Für einen Vorschlag der Erfindung verfügt der Steuereinlass über ein Anschlussgewinde, welches vorzugsweise als Innengewinde ausgebildet ist. An das Anschlussgewinde kann dann ein Koppelgehäuse angeschraubt werden. Dieses Koppelgehäuse kann dann den Steueranschluss bilden, der die Verbindung mit einer Steuerleitung ermöglicht. Andererseits kann das Koppelgehäuse auch eine Dicht- und Montagefläche ausbilden, welche dann (wie zuvor erläutert) mit einem Dicht- und Montageauge eines Anschlussgehäuses montiert werden kann.

Für die konstruktive Gestaltung und Geometrie der Reifendruckventilbaugruppe und der einzelnen Komponenten derselben gibt es im Rahme der Erfindung vielfältige Möglichkeiten. So ist beispielsweise möglich, dass die Reifendruckventilbaugruppe ein Gehäuse mit einem durchgehenden oder unterteilten Innenraum aufweist, in dem die einzelnen Ventilelement räumlich verteilt sein können. Möglich ist auch eine langgestreckte Reifendruckventilbaugruppe, in der einzelne Komponenten und Ventilelemente nebeneinander angeordnet sind. Für einen besonderen Vorschlag der Erfindung bilden in der Reifendruckventilbaugruppe die Verzweigung, der Steuerzweig, der Versorgungszweig und das Reifendruckventil einen Gehäusering. Dieser Gehäusering erstreckt sich um eine Durchgangsausnehmung. Der Gehäusering kann beispielsweise in grober Näherung rechteckig oder quadratisch ausgebildet sein. In diesem Fall können im Bereich eines Schenkels oder einer Ecke der Versorgungeingang und die Verzweigung angeordnet sein. Von der Verzweigung erstreckt sich dann der Versorgungszweig in dem Gehäusering in eine Richtung, während der Steuerzweig sich von der Verzweigung in eine andere Richtung erstreckt. Eine Vereinigung des Versorgungszweigs einerseits und des Steuerzweigs andererseits erfolgt dann durch das Reifendruckventil, welches sich entlang eines Schenkels des Gehäuserings erstrecken kann. Um lediglich ein Beispiel für die konstruktive Gestaltung des Gehäuserings zu nennen, kann der Gehäusering aus Teilgehäusen bestehen, die dann jeweils einen Schenkel des rechteckigen Gehäuserings bilden. Möglich ist dabei auch, dass das einen Schenkel des Gehäuserings ausbildende Reifendruckventil im Bereich der zugeordneten Ecken des Gehäuserings jeweils über Dicht- und Montageflächen verfügt, über die das Gehäuse des Reifendruckventils dann mit Dicht- und Montageaugen der Anschluss- oder Teilgehäuse, die an die jeweilige Ecke anschließen, verbunden ist.

Für eine weiteren Vorschlag der Erfindung ist in dem Versorgungszweig eine in Richtung des Reifendruckventils öffnendes Rückschlagventil angeordnet. Dieses Rückschlagventil kann die Betriebssicherheit erhöhen, indem eine unerwünschter Übertritt von Druckluft in dem Versorgungszweig zu der Ventilkammer und/oder eine etwaige Rückströmung in entgegengesetzte Richtung in der Sperrstellung des Rückschlagventil unterbunden wird.

Für einen weiteren Vorschlag ist in einer Reifendruckventilbaugruppe die Dicht- und Montagefläche des Gehäuses des Reifendruckventils unter Abdichtung von einem Dicht- und Montageauge des Anschlussgehäuses aufgenommen, durch welches sich der Versorgungszweig erstreckt. Alternativ oder kumulativ kann in das Anschlussgewinde des Steuereinlasses ein Koppelgehäuse eingeschraubt sein. Dieses Koppelgehäuse kann dann eine Dicht- und Montagefläche aufweisen, die unter Abdichtung von einem Dicht- und Montagauge eines Anschlussgehäuses aufgenommen ist. In diesem Fall erstreckt sich der Steuerzweig durch das Anschlussgehäuse, das Dicht- und Montageauge des Anschlussgehäuses, die Dicht- und Montagefläche des Gehäuses des Reifendruckventils und den Steuereinlass.

Die Verbindung über die Wechselwirkung zwischen Dicht- und Montageflächen und Dicht- und Montageaugen kann für einen besonderen Vorschlag der Erfindung auch genutzt werden, indem das Steuerzweiggehäuse zwei Dicht- und Montageaugen aufweist, die Bestandteil des Steuerzweiges sind. In diesem Fall kann die Dicht- und Montagefläche des in das Anschlussgewinde des Steuereinlasses des Reifendruckventils eingeschraubten Koppelgehäuses in einem Dicht- und Montageauge eines Anschlussgehäuses aufgenommen sein. Hingegen ist in dem anderen Dicht- und Montageauge des Anschlussgehäuses eine Dicht- und Montagefläche eines weiteren Gehäuses, insbesondere ein Gehäuse des Selbsthalteventils und/oder des Sperrventils, aufgenommen.

Eine weitere Lösung der der Erfindung zugrunde liegenden Aufgabe stellt eine Gruppe von Reifendruckventilbaugruppen dar. Die Gruppe der Reifendruckventilbaugruppen verfügt über zwei Teilgruppen:
Eine erste Teilgruppe der Reifendruckventilbaugruppen ist einkreisig ausgebildet. Hingegen ist die zweite Teilgruppe der Reifendruckventilbaugruppen zweikreisig ausgebildet. Derartige Gruppen mit zwei Teilgruppen der Reifendruckventilbaugruppen können beispielsweise von einem Hersteller hergestellt und angeboten werden, um gleichen oder unterschiedlichen Abnehmern einkreisige und zweikreisige Reifendruckventilbaugruppen anzubieten. Möglich ist auch, dass derartige unterschiedliche Teilgruppen bei Kunden und Fahrzeugherstellern oder Anhängerherstellern eingesetzt werden zur bedarfsgerechten Ausstattung der Fahrzeuge oder Anhänger mit einer einkreisigen oder zweikreisigen Reifendruckregelanlage.

Erfindungsgemäß wird vorgeschlagen, dass die Reifendruckventilbaugruppen der beiden Teilgruppen baugleiche Reifendruckventile aufweisen, wobei dann die Bildung entweder der einkreisigen Reifendruckventilbaugruppe oder der zweikreisigen Reifendruckventilbaugruppe eine Kombination mit unterschiedlichen weiteren pneumatischen Komponenten erfolgt, um die Einkreisigkeit oder Zweikreisigkeit zu gewährleisten. Hierbei sind die Schnittstellen des baugleichen Reifendruckventils so ausgestaltet, dass die pneumatische und mechanische Kopplung mit diesen unterschiedlichen Komponenten möglich ist. Vorzugsweise erfolgt diese Kopplung durch die zuvor erläuterte Verbindung mindestens einer Dicht- und Montagefläche des Reifendruckventils mit mindestens einem Dicht- und Montageauge mindestens eines Anschlussgehäuses einer Komponente.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisch eine einkreisige Reifendruckventilbaugruppe mit einem Reifendruckventil.
- **Fig. 2**: zeigt in einem Längsschnitt eine konstruktive Ausgestaltung eines Reifendruckventils.
- **Fig. 3**: zeigt eine geschnittene Darstellung eines Reifendruckventils gemäß Fig. 2 in einer einkreisigen Reifendruckventilbaugruppe, wobei sich die Reifendruckventilbaugruppe in einer Sperrstellung befindet.
- **Fig. 4**: zeigt die Reifendruckventilbaugruppe gemäß Fig. 3 in einer Entlüftungsstellung.
- **Fig. 5**: zeigt die Reifendruckventilbaugruppe gemäß Fig. 3 und 4 in einer Belüftungsstellung.
- **Fig. 6**: zeigt in einer räumlichen Darstellung die Anordnung der Reifendruckventilbaugruppe gemäß Fig. 3 bis 5 an einer Felge eines Fahrzeugrades.
- **Fig. 7**: zeigt den Einsatz des Reifendruckventils gemäß Fig. 2 in einer zweikreisigen Reifendruckventilbaugruppe.
- **Fig. 8**: zeigt in einer räumlichen Darstellung die Anordnung der zweikreisigen Reifendruckventilbaugruppe gemäß Fig. 7 an einer Felge eines Fahrzeugrades.

### FIGURENBESCHREIBUNG

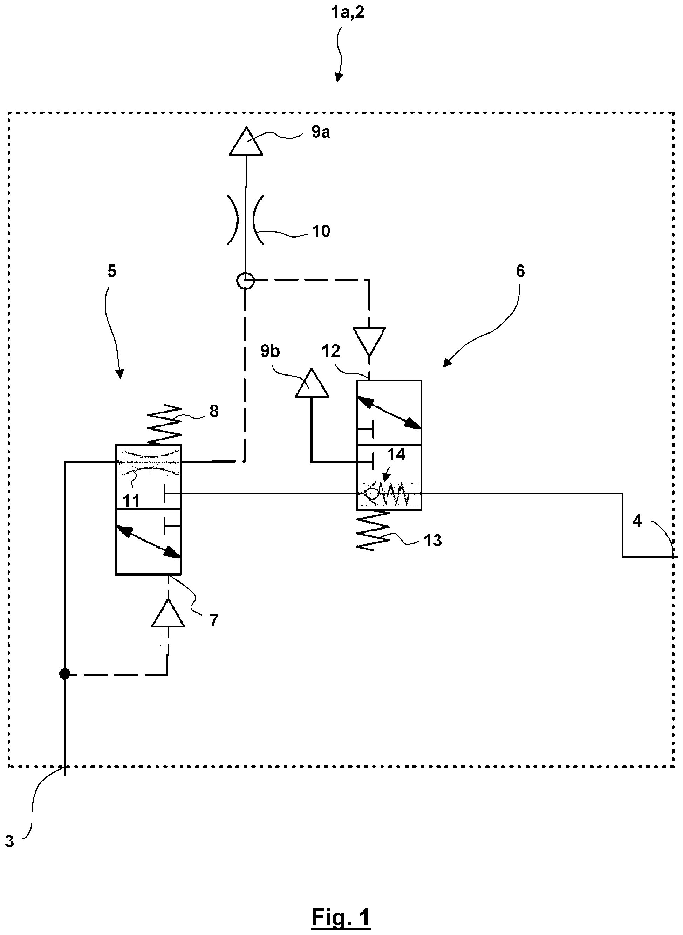

**Fig. 1** zeigt eine Reifendruckventilbaugruppe 1 mit einem Reifendruckventil 2. Die Reifendruckventilbaugruppe 1 ist einkreisig ausgebildet und verfügt über einen Steuer- und Versorgungsanschluss 3, der, insbesondere über einen grundsätzlich bekannten Fitting, mit einem Steuer- und Versorgungsleitung verbindbar ist, wobei diese Steuer- und Versorgungsleitung dann mit einer Drehdurchführung verbunden ist, die den Übertritt des Steuer- und Versorgungsdrucks von dem Fahrzeug zu dem Fahrzeugrad ermöglicht. Der Druck an dem Steuer- und Versorgungsanschluss 3 wird fahrzeugseitig durch geeignete Ventileinrichtungen mit zugeordneter Druckluftaufbereitungseinrichtung und einem Kompressor und/oder einem Vorratsbehälter vorgegeben, wobei die im Folgenden noch beschriebenen unterschiedlichen Drücke an dem Steuer- und Versorgungsanschluss 3 zur Veränderung der Betriebsstellung der Reifendruckventilbaugruppe 1 durch diese Ventileinrichtungen vorgegeben werden kann.

Des Weiteren verfügt die Reifendruckventilbaugruppe 1 über einen Reifenanschluss 4, der unmittelbar in eine Felge eines Fahrzeugrades eingeschraubt sein kann, wobei der Reifenanschluss 4 unmittelbar oder mittelbar in den Reifen des Fahrzeugrades münden kann.

Die Reifendruckventilbaugruppe 1 verfügt über ein Überströmventil 5 und ein Entlüftungsventil 6, die hier in pneumatischer Reihenschaltung zwischen den Steuer- und Versorgungsanschluss 3 und den Reifenanschluss 4 zwischengeordnet sind.

In der schematischen Darstellung in Fig. 1 ist die Überströmfunktion des Überströmventils 5 dadurch symbolisiert, dass einem Überströmfunktion-Steuereinlass 7 der Druck an dem Steuer-und Versorgungsanschluss 3 über die gestrichelte Leitung zugeführt wird. Entgegengesetzt zu der Wirkung des Drucks an dem Überströmfunktion-Steuereinlass 7 wirkt auf dass Überströmventil 5 eine Überströmventilfeder 8. Für einen Druck unterhalb eines Schwellwertes, der durch die Steifigkeit und etwaige Vorspannung der Überströmventilfeder 8 und der Steuerfläche, auf die der Druck an dem Überströmfunktion-Steuereinlass 7 wirkt, vorgegeben wird, erfolgt eine Umschaltung des Überströmventils 5 aus der in Fig. 1 wirksamen ersten Betriebsstellung in die zweite Betriebsstellung. In der ersten Betriebsstellung des Überströmventils 5 verbindet das Überströmventil 5 den Steuer- und Versorgungsanschluss 3 mit einer Entlüftung 9a, wobei der Entlüftung 9a eine Drossel 10 vorgeordnet ist. Eine weitere Drossel 11, die nur in der ersten Betriebsstellung wirksam wird, ist in das Entlüftungsventil 5 integriert. Hingegen verbindet das Entlüftungsventil 5 in der zweiten Betriebsstellung den Steuer- und Versorgungsanschluss 3 mit einem Eingang des Entlüftungsventils 6.

Das Entlüftungsventil 6 verfügt über einen Steuereinlass 12. Der Steuereinlass ist in der ersten Betriebsstellung des Überströmventils 5 mit der mit der Entlüftung 9a verbundenen Leitung zwischen dem Überströmventil 5 und der Drossel 10 verbunden. Entgegengesetzt zu der Beaufschlagung des Entlüftungsventils 6 durch den Druck an dem Steuereinlass 12 ist das Entlüftungsventil 6 durch eine Entlüftungsventilfeder 13 beaufschlagt. Für einen Umschaltdruck an dem Steuereinlass 12, der größer ist als ein zweiter Schwellwert, erfolgt die Umschaltung des Entlüftungsventils 6 aus der in Fig. 1 wirksamen ersten Betriebsstellung in die zweite Betriebsstellung. Hierbei hängt der zweite Schwellwert ab von der Fläche eines Steuerkolbens, auf den der Druck an dem Steuereinlass 12 einwirkt, und der Steifigkeit und einer etwaigen Vorspannung der Entlüftungsventilfeder 13. In der ersten Betriebsstellung verbindet das Entlüftungsventil 6 das Überströmventil 5, also in der zweiten Betriebsstellung des Überströmventils 5 den Steuer- und Versorgungsanschluss 3, mit dem Reifenanschluss 4, wobei in der ersten Betriebsstellung ein Rückschlagventil 14 des Entlüftungsventils 6 wirksam ist, welches in Richtung des Reifenanschlusses 4 öffnet. In der zweiten Betriebsstellung verbindet das Entlüftungsventil 6 den Reifenanschluss 4 mit einer Entlüftung 9b.

Die Funktionsweise der Reifendruckventilbaugruppe 1 gemäß Fig. 1 ist wie folgt:
Liegt an dem Steuer- und Versorgungsanschluss 3 ein Druck an, der kleiner ist als der erste Schwellwert, befindet sich die Reifendruckventilbaugruppe 1 in der Betriebsstellung gemäß Fig. 1. Sowohl das Überströmventil 5 als auch das Entlüftungsventil 6 befinden sich in der ersten Schaltstellung. Dies hat zur Folge, dass der Reifenanschluss 4 durch das Rückschlagventil 14 des Entlüftungsventils 6 abgesperrt ist. Auf diese Weise kann der Druck in dem Reifen gehalten werden. Für diese Betriebsstellung ist der Steuer- und Versorgungsanschluss 3 über die Drosseln 11, 10 mit der Entlüftung 9a verbunden, was zu einem geringen Leckagestrom führt. Der an dem Steuereinlass 12 anliegende Druck ist nicht groß genug, um das Entlüftungsventil 6 in die zweite Schaltstellung umzuschalten. Der Reifen ist somit abgesperrt.

Wird der Druck an dem Steuer- und Versorgungsanschluss 3 so erhöht, dass dieser größer ist als der erste Schwellwert, kommt es noch nicht zur Umschaltung des Überströmventils 5. Allerdings führt die Druckerhöhung an dem Steuereinlass 12 des Entlüftungsventils 6 dazu, dass das Entlüftungsventil 6 von der ersten Schaltstellung in die zweite Schaltstellung umgeschaltet wird. Der Reifenanschluss 4 und damit der Reifen wird über das Entlüftungsventil 6 mit der Entlüftung 9b verbunden. Der Druck in dem Reifen wird auf diese Weise verringert.

Wird der Druck an dem Steuer- und Versorgungsanschluss 3 weiter erhöht, sodass dieser größer ist als der zweite Schwellwert, kommt es zur Umschaltung des Überströmventils 5, während der Steuereinlass 12 über die Drossel 10 und die Entlüftung 9a entlüftet wird. Somit nimmt (u. U. mit einer durch die Drossel 10 vorgegebenen Verzögerung) das Entlüftungsventil 6 seine erste Betriebsstellung ein. Der Steuer- und Versorgungsanschluss 3 ist dann über das Überströmventil 5 in seiner zweiten Betriebsstellung und das Entlüftungsventil 6 mit dem Rückschlagventil 14 mit dem Reifenanschluss 4 verbunden. Es kommt somit zu einer Befüllung des Reifens mit einer damit einhergehenden Erhöhung des Drucks in dem Reifen.

Um lediglich einige die Erfindung nicht beschränkende Beispiele zu nennen, kann der erste Schwellwert im Bereich von 2 bar bis 4 bar liegen, während der zweite Schwellwert im Bereich von 4 bar bis 6 bar liegen kann.

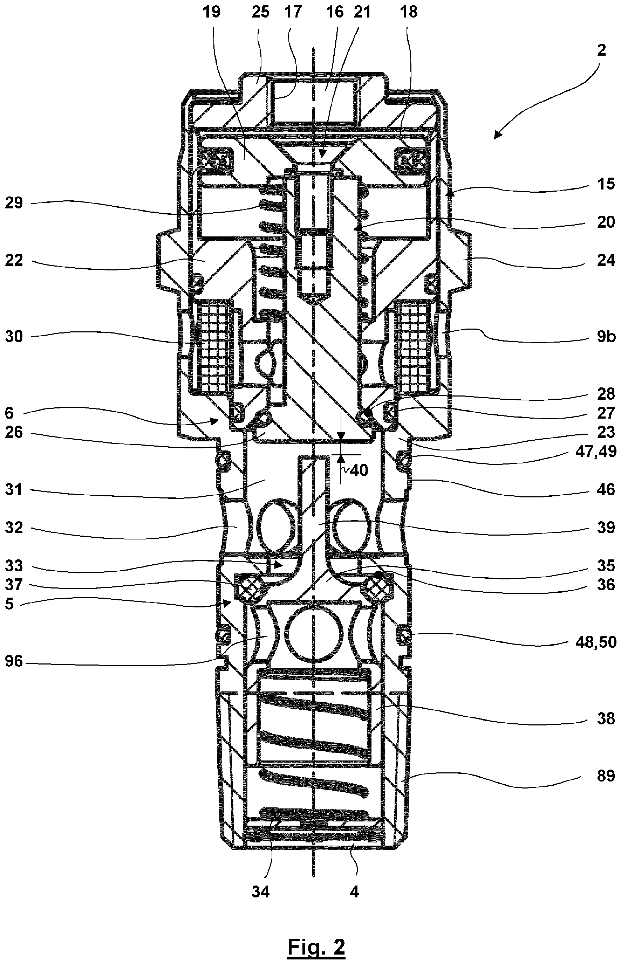

**Fig. 2** zeigt eine konstruktive Ausgestaltung eines Reifendruckventils 2 in einem Längsschnitt. Das Reifendruckventil 2 verfügt über ein mehrteiliges Gehäuse 15. Das Gehäuse 15 weist einen Steuereinlass 16 auf, im Bereich dessen ein Anschlussgewinde 17 vorgesehen ist. Das Anschlussgewinde 17 mündet in einen Steuerraum 18, der von einem verschieblich in dem Gehäuse 15 geführten Steuerkolben 19 begrenzt ist. Der Steuerkolben 19 ist mit einem Entlüftungsventilkörper 20 fest verbunden, was für das dargestellte Ausführungsbeispiel mittels eines Verschraubens durch eine Schraube 21 erfolgt.

In einen Innenraum des Gehäuses 15 ist für das dargestellte Ausführungsbeispiel ein Gehäuseeinsatz 22 eingesetzt. Der Gehäuseeinsatz 22 ist axial gefangen zwischen einem Absatz 23 eines den durchgehenden Innenraum ausbildenden Gehäuseteils 24 und einen in ein Innengewinde des Gehäuseteils 24 eingeschraubten Gehäusedeckel 25, der den Steuereinlass 16 und das Anschlussgewinde 17 ausbildet. Der Gehäuseeinsatz 22 verfügt über eine durchgehende Ausnehmung, durch die sich der Entlüftungsventilkörper 20 erstreckt. In dem dem Steuerkolben 17 abgewandten Endbereich besitzt der Entlüftungsventilkörper 20 eine Erweiterung, die einen Entlüftungsventilteller 26 bildet. In der in Fig. 2 wirksamen Schließstellung des Entlüftungsventils 6 kommt der Entlüftungsventilteller 26 unter Abdichtung, insbesondere infolge eines von dem Entlüftungsventilteller 26 gehaltenen Dichtrings 27, zur Anlage an einen von dem Gehäuseeinsatz 22 in dem zugeordneten Endbereich ausgebildeten Entlüftungsventilsitz 28. Zwischen der Unterseite des Steuerkolbens 19 und einem weiteren Absatz des Gehäuseeinsatzes 22 ist eine vorgespannte Entlüftungsventilfeder 29 gefangen. Sowohl der Gehäuseeinsatz 22 als auch das Gehäuseteil 24 weisen radiale Ausnehmungen oder Bohrungen auf, die über einen Entlüftungsschalldämpfer 30 (der auch als "Silencer" bezeichnet wird, der ringförmig ausgebildet sein kann und/oder in einer Ringkammer zwischen dem Gehäuseeinsatz 22 und dem Gehäuseteil 24 angeordnet sein kann) miteinander und mit der Umgebung, die die Entlüftung 9b bildet, verbunden.

Unterhalb des Entlüftungsventilkörpers 20 befindet sich eine Ventilkammer 31. In die Ventilkammer 31 mündet ein Versorgungseinlass 32. Befindet sich der Entlüftungsventilkörper 20 in der Schaltstellung, in der der Entlüftungsventilteller 26 beanstandet von dem Entlüftungsventilsitz 28 angeordnet ist und somit einen Übertrittsquerschnitt freigibt, ist die Ventilkammer 31 mit der Entlüftung 9b verbunden.

Die Ventilkammer 31 wird auch durch das Überströmventil 5 begrenzt. Das Überströmventil 5 verfügt über einen Überströmventilkörper 33. Durch eine Überströmventilfeder 34 wird ein Überströmventilteller 35 des Überströmventilkörpers 33 entgegengesetzt zu der Wirkung des Drucks in der Ventilkammer 31, der auf die Rückseite des Überströmventiltellers 35 wirkt, in Richtung eines Überströmventilsitzes 36 beaufschlagt. In der in Fig. 2 wirksamen Schaltstellung ist in Folge dieser Beaufschlagung durch die Überströmventilfeder 34 das Überströmventil 5 geschlossen, da der Überströmventilteller 35 unter Abdichtung, insbesondere unter Zwischenordnung eines an dem Überströmventilteller 35 oder dem Überströmventilsitz 36 gehaltenen Dichtrings 37, an dem Überströmventilsitz 36 anliegt. Wird hingegen das Überströmventil 5 in die Schaltstellung überführt, in der der Überströmventilteller 35 beabstandet von dem Überströmventilsitz 36 angeordnet ist, stellt der so bereitgestellte Übertrittsquerschnitt eine pneumatische Verbindung zwischen der Ventilkammer 31 und dem Reifenanschluss 4 bereit.

Für das dargestellte Ausführungsbeispiel verfügt der Überströmventilkörper 33 auf der der Ventilkammer 31 abgewandten Seite über eine Führungshülse 38. Die Führungshülse 38 ist gleitend in einer Innenbohrung des Gehäuseteils 24 geführt. Des Weiteren dient die Führungshülse 38 der Aufnahme der Überströmventilfeder 34. Die Führungshülse 38 weist Querbohrungen 96auf, über die Druckluft von dem Übertrittsquerschnitt des Überströmventils 5 zu dem Reifenanschluss 4 überströmen kann. Der Überströmventilkörper 33 verfügt über einen Fortsatz 39, der sich von dem Überströmventilteller 35 in das Innere der Ventilkammer 31 erstreckt. Eine Stirnseite des Fortsatzes 39 ist mit einem Abstand 40 beabstandet von der Stirnseite des Entlüftungsventilkörpers 20, insbesondere dem Entlüftungsventilteller 26, angeordnet.

Eine mögliche Funktionsweise bei entsprechender Auslegung der Ventil- und Steuerflächen sowie der Vorspannungen und der Steifigkeiten der unterschiedlichen Federn des Reifendruckventils 2 ist wie folgt:
Ist der Druck an dem Steuereinlass 16 und/oder dem Versorgungseinlass 32 unterhalb eines ersten Schwellwertes, hält die Entlüftungsventilfeder 29 das Entlüftungsventil 6 in der Schließstellung und die Überströmventilfeder 34 hält das Überströmventil 5 in der Schließstellung. Somit kann an dem Versorgungseinlass 32 anliegende Druckluft weder über die Entlüftung 9b entlüftet werden noch zur Erhöhung des Drucks in dem Reifen zu dem Reifenanschluss 4 gelangen. Vielmehr ist über das Reifendruckventil 4 der Reifen abgesperrt.

Kommt es zu einer Erhöhung des Drucks an dem Steuereinlass 16, so dass der Druck größer ist als der erste Schwellwert, aber kleiner als der zweite Schwellwert, führt der an dem Steuereinlass 16 wirkenden Druck dazu, dass der Steuerkolben 19 das Entlüftungsventil 6 in seine Entlüftungsstellung überführt. Die Bewegung des Entlüftungsventilkörpers 20 führt zur Beseitigung des Abstandes 40 und der Entlüftungsventilkörper 20 übt mit seiner Stirnfläche eine Öffnungskraftkomponente auf den Überströmventilkörper 33 aus. Zusätzlich kann ein Druck in der Ventilkammer 31 auf den Überströmventilteller 35 wirken und eine zweite Öffnungskraftkomponente erzeugen. Die Überlagerung der beiden Öffnungskraftkomponenten führt dann zur Öffnung des Überströmventils 5. Somit kann Druckluft von dem Reifenanschluss 4 über das geöffnete Überströmventil 5 und das geöffnete Entlüftungsventil 6 zu den Entlüftung 9b strömen.

Liegt hingegen an dem Steuereinlass 16 kein Druck an und an dem Versorgungseinlass 32 ein Druck an, der größer ist als der zweite Schwellwert, führt dies dazu, dass das Entlüftungsventil 6 durch die Entlüftungsventilfeder 29 in die Sperrstellung überführt wird, während der Druck an dem Versorgungseinlass 32 eine Öffnungskraft an dem Überströmventilteller 35 hervorruft, die ausreichend ist, um das Überströmventil 5 zu öffnen. Dies hat zur Folge, dass Druckluft von dem Versorgungseinlass 32 über das geöffnete Überströmventil 5 zu dem Reifenanschluss 4 strömen kann, womit eine Befüllung des Reifens erfolgt.

Somit wird zur Herbeiführung der Entlüftungsstellung des Reifendruckventils 2 das Überströmventil 5 zumindest teilweise mechanisch durch das Entlüftungsventil 6 geöffnet, während dieses zur Herbeiführung der Belüftungsstellung des Reifendruckventils 2 rein pneumatisch durch den das Überströmventil 5 beaufschlagenden Druck geöffnet wird.

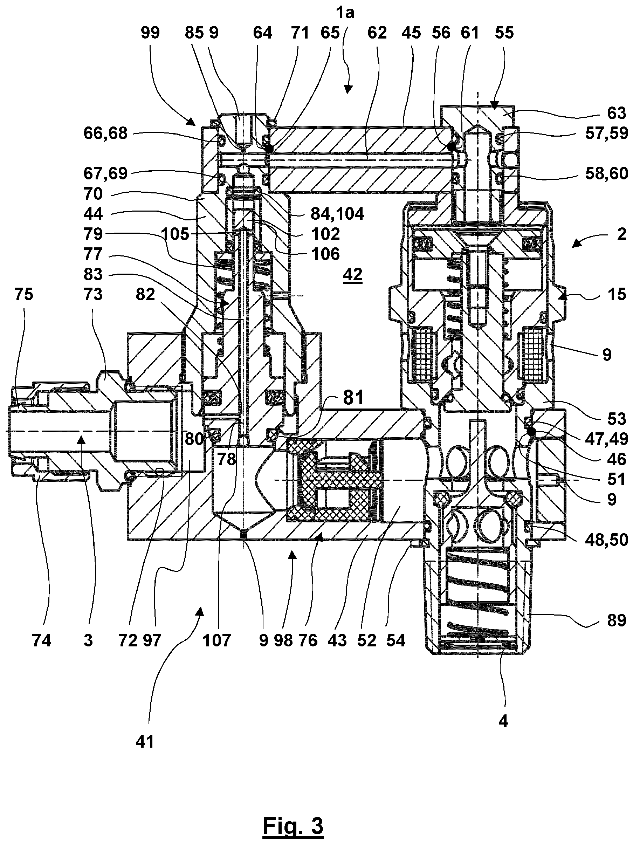

**Fig. 3 bis 5** zeigen die Verwendung des Reifendruckventils 2 gemäß Fig. 2 in einer einkreisigen Reifendruckventilbaugruppe 1a. Die Reifendruckventilbaugruppe 1a verfügt über einen Gehäusering 41, der hier rechteckig oder quadratisch ausgebildet ist und eine Durchgangsausnehmung 42 aufweist. Der Gehäusering 41 weist das Gehäuse 15 des Reifendruckventils 2, ein Anschlussgehäuse 43, ein Selbsthalteventilgehäuse 44 und ein weiteres Anschlussgehäuse 45 auf, die jeweils einen Schenkel des rechteckigen Gehäuserings 41 ausbilden und in dieser Reihenfolge in Fig. 3 im Uhrzeigersinn aneinander anschließen.

Um die Verbindung des Anschlussgehäuses 43 an das Gehäuse 15 zu ermöglichen, weist die Mantelfläche des Gehäuses 15 im Umgebungsbereich des Versorgungseinlasses 32 eine zylindrische Dicht- und Montagefläche 46 auf. Die Dicht- und Montagefläche 46 kann beidseits des Versorgungseinlasses 32 umlaufende Nuten 47, 48 aufweisen, in denen Dichtringe 49, 50 angeordnet sind.

Das Anschlussgehäuse 43 verfügt über eine Durchgangsbohrung, die ein Dicht- und Montageauge 51 ausbildet. In dem Dicht- und Montageauge 51 des Anschlussgehäuses 43 findet passgenau und unter Abdichtung die Dicht- und Montagefläche 46 des Gehäuses 15 Aufnahme, womit Druckluft (unter Abdichtung nach außen) von dem Versorgungseinlass 32 zu einem Innenraum 52 des Anschlussgehäuses 43 (und umgekehrt) gelangen kann. Die derart montierte Stellung des Anschlussgehäuses 43 an dem Gehäuse 15 ist dadurch gesichert, dass das Anschlussgehäuse 43 zwischen einem Absatz 53 des Gehäuseteils 24 und einem an der Außenfläche des unteren Endbereichs des Gehäuseteils 24 gehaltenen Sicherungsring 54 gefangen ist.

In das Anschlussgewinde 17 des Gehäusedeckels 25 ist ein Koppelgehäuse 55 eingeschraubt. Das Koppelgehäuse 55 weist (grundsätzlich entsprechend dem Verbindungsbereich zwischen dem Gehäuse 15 und dem Anschlussgehäuse 43) eine Dicht- und Montagefläche 56 mit Nuten 57, 58 und Dichtungen 59, 60 auf.

Das Anschlussgehäuse 45 verfügt (grundsätzlich entsprechend dem Anschlussgehäuse 43) über ein Dicht- und Montageauge 61. In dem Dicht- und Montageauge 61 ist (unter Abdichtung nach außen) die Dicht- und Montagefläche 56 aufgenommen, so dass Druckluft unter Abdichtung zwischen dem Steuereinlass 16 und einem Längskanal 62 übertreten kann. Die montierte Stellung des Anschlussgehäuses 45 an dem Gehäuse 15 ist dadurch gesichert, dass das Anschlussgehäuse 45 durch eine Erweiterung 63 gegen eine Stirnseite des Gehäusedeckels 25 gedrückt wird und somit im Bereich des Dicht- und Montageauges 61 das Anschlussgehäuse 45 zwischen der Erweiterung 63 und der Stirnseite des Gehäusedeckels 25 gefangen ist.

In dem anderen Endbereich mündet der Längskanal 62 des Anschlussgehäuses 45 in ein weiteres Dicht- und Montageauge 64 des Anschlussgehäuses 45. In dem Dicht- und Montageauge 64 ist eine Dicht- und Montagefläche 65 des Selbsthalteventilgehäuses 44 mit zugeordneten Nuten 66, 67 und Dichtringen 68, 69 aufgenommen. Die montierte Stellung ist dadurch gesichert, dass das Anschlussgehäuse 45 im Bereich des Dicht- und Montageauges 64 gefangen ist zwischen einem Absatz 70 des Selbsthalteventilgehäuses 44 und einem endseitig an dem Selbsthalteventilgehäuse 44 gehaltenen Sicherungsring 71.

In dem anderen Endbereich ist das Selbsthalteventilgehäuse 44 in ein Innengewinde des Anschlussgehäuses 43 eingeschraubt.

In dem dem Reifendruckventil 2 abgewandten Endbereich verfügt das Anschlussgehäuse 43 über ein Innengewinde 72, in welches unter Abdichtung ein Anschlussstutzen 73 eingeschraubt ist. Der Anschlussstutzen 73 ist geeignet zum Anschluss einer Steuer- und Versorgungsleitung 88 ausgebildet unter Einsatz herkömmlicher, an sich bekannter Verbindungstechnologien. Für das dargestellte Ausführungsbeispiel ist die Verbindung mit einer Schraubkappe 74 gebildet, die auf den Anschlussstutzten 73 aufgeschraubt werden kann. Zwischen einem hülsenförmigen Fortsatz, unter Umständen mit einer elastisch verformbaren Klemmnase 75, und der Schraubkappe 74 kann dann die Steuer- und Versorgungsleitung 88 eingespannt und verklemmt werden.

Der Innenraum 52 des Anschlussgehäuses 43 verbindet den Versorgungseinlass 32 des Reifendruckventils 2 mit dem Steuer- und Versorgungsanschluss 3. Allerdings ist in diesem Pfad einerseits ein in Richtung des Versorgungseinlasses 32 öffnendes Rückschlagventil 76 angeordnet. Des weiteren erstreckt sich in dem Selbsthalteventilgehäuse 44 und dem Anschlussgehäuse 43 ein Selbsthalteventilkörper 77. Die Eingangsseite des Rückschlagventils 76 ist über einen Versorgungsteilzweig 78 des Selbsthalteventilkörpers 77 mit dem Steuer- und Versorgungsanschluss 3 verbunden.

Der Selbsthalteventilkörper 77 ist unter Beaufschlagung einer Selbsthalteventilfeder 79 je nach der in dem Innenraum 52 eingangsseitig des Rückschlagventils 76 wirkenden und auf die Stirnseite des Selbsthalteventilkörpers 77 wirkenden Druck verschieblich. Für kleine Drücke, die auf die Stirnseite des Selbsthalteventilkörpers 77 wirken, drückt die Selbsthalteventilfeder 79 den Selbsthalteventilkörper 77 (ggf. mit einem in einer Nut angeordneten Dichtring 80) gegen einen hier von dem Anschlussgehäuse 43 ausgebildeten Selbsthalteventilsitz 81. In diesem Fall ist der Übertritt von dem Steuer- und Versorgungsanschluss 3 zu dem Innenraum 52 des Anschlussgehäuses 43 nur über den Versorgungsteilzweig 78 möglich. Hingegen kann bei einem größeren Druck, der auf die Stirnseite des Selbsthalteventilkörpers 77 wirkt, der Selbsthalteventilkörper 77 von dem Selbsthalteventilsitz 81 unter Erhöhung der Beaufschlagung der Selbsthalteventilfeder 79 weg bewegt werden, womit ein Bypassquerschnitt 101 gebildet ist und der Bypassquerschnitt 101 einen Bypass zu dem Versorgungsteilzweig 78 für den Übertritt von Druckluft von dem Steuer- und Versorgungsanschluss 3 zu dem Innenraum 52 bereitstellt.

Der Versorgungsteilzweig 78 verfügt über eine Verzweigung 82, im Bereich welcher ein Steuerzweigabschnitt 83 abzweigt. Der Steuerzweigabschnitt 83 schafft durch den Selbsthalteventilkörper 77 hindurch eine Verbindung zu der Dicht- und Montagefläche 65, über die der Steuerzweigabschnitt 83 mit dem Längskanal 62 (und darüber mit dem Steuereinlass 16) verbunden ist.

In der Reifendruckventilbaugruppe 1a gelangt der Steuer- und Versorgungsdruck an dem Steuer- und Versorgungsanschluss 3 über einen Steuer- und Versorgungskanal 97 zu der Verzweigung 82, im Bereich welcher eine Verzweigung einerseits zu einem Versorgungszweig 98 und andererseits einem Steuerzweig 99 erfolgt. In dem Gehäusering 41 erstrecken sich von der Verzweigung 82 der Versorgungszweig 98 und der Steuerzweig 99 in entgegengesetzte Umfangsrichtungen. Für das dargestellte Ausführungsbeispiel erstreckt sich der Versorgungszweig 98 durch das Anschlussgehäuse 43, während sich der Steuerzweig durch das Selbsthalteventilgehäuse 44 und das Anschlussgehäuse 45 erstreckt. Der Versorgungszweig 98 verbindet die Verzweigung 82 mit dem Versorgungseinlass 32 des Reifendruckventils 2. Der Steuerzweig 99 verbindet die Verzweigung 82 mit dem Steuereinlass 16 des Reifendruckventils 2.

Der Selbsthalteventilkörper 77 und der Selbsthalteventilsitz 81 bilden ein Selbsthalteventil 100. In der Schließstellung des Selbsthalteventils 100 ist der Versorgungszweig 98 ausschließlich über den Versorgungsteilzweig 78 und die Verzweigung 82 und über diese mit dem Steuer- und Versorgungskanal 97 verbunden. Hingegen schafft das Selbsthalteventil 100 in der Öffnungsstellung einen Bypassquerschnitt 101, über den eine zusätzliche Verbindung des Versorgungszweigs 98 mit dem Steuer- und Versorgungskanal 97 geschaffen ist.

Der Selbsthalteventilkörper 77 bildet in dem dem Selbsthalteventilsitz 81 abgewandten Endbereich einen Schließkörper 102 aus. Wird der Selbsthalteventilkörper 77 von dem Selbsthalteventilsitz 81 weg bewegt, kommt der Schließkörper 102 unter Abdichtung zur Anlage an einen Sperrventilsitz 84. Für das dargestellte Ausführungsbeispiel ist der Sperrventilsitz 84 von einem Absatz des Selbsthalteventilgehäuses 44, ggf. mit einem Dichtring, ausgebildet. Auf diese Weise bildet der Selbsthalteventilkörper 77 mit dem Schließkörper 102 und dem Sperrventilsitz 84 ein Sperrventil 103 aus. In der Öffnungsstellung öffnet das Sperrventil 103 den Steuerzweig 99, so dass ein Übertritt von der Verzweigung 82 über den Versorgungsteilzweig 78 und den Längskanal 62 zu dem Steuereinlass 16 möglich ist. Hingegen sperrt das Sperrventil 103 in der Sperrstellung den Steuerzweig 99 ab, indem die Verbindung zwischen der Verzweigung 82 und dem Längskanal 62 abgesperrt wird. Hierbei entspricht die Sperrstellung des Sperrventils 103 der Öffnungsstellung des Selbsthalteventils 103, während die Öffnungsstellung des Sperrventils 103 der Schließstellung des Selbsthalteventils 103 entspricht.

Stromabwärts des Sperrventils 103 ist der Steuerzweig 99 über eine Drossel 85 mit einer Entlüftung 9 verbunden. Hierbei ist die Drossel 85 derart dimensioniert, dass bei geöffnetem Sperrventil 103 von der Verzweigung 82 mehr Druckluft in den Längskanal 62 gelangt als über die Drossel 85 abgeführt wird, womit ein Druck an dem Steuereinlass 16 aufgebaut werden kann. Nimmt hingegen das Sperrventil 103 seine Sperrstellung ein, erfolgt die Entlüftung des Steuereinlasses 16 über die Drossel 85 zu der Entlüftung 9.

Der Selbsthalteventilkörper 77, die Selbsthalteventilfeder 79 und der Selbsthalteventilsitz 81 bilden ein Selbsthalteventil 100. Nimmt das Selbsthalteventil 100 die Schließstellung ein (vgl. Fig. 3), wirkt der Druck ausgangsseitig des Selbsthalteventils 100 in den Versorgungszweig 98 auf eine Stirnfläche des Selbsthalteventilkörpers 77, die durch den dichtenden Kontakt mit dem Selbsthalteventilsitz 81, insbesondere mit dem Dichtring 80, begrenzt ist. Diese Stirnfläche bildet eine erste Steuerfläche 107. Nimmt hingegen das Selbsthalteventil 100 seine Selbsthalte- oder Öffnungsstellung ein, wirkt der Druck in dem Steuerzweig 99 auf eine vergrößerte Stirnfläche des Selbsthalteventilkörpers 77, die für das dargestellte Ausführungsbeispiel durch den Außendurchmesser der Dichtungen 104 begrenzt ist, über die der Selbsthalteventilkörper 77 gegenüber dem Selbsthalteventilgehäuse 44 geführt ist. Diese vergrößerte Stirnfläche bildet eine zweite Steuerfläche 108. Die vergrößerte Wirkfläche des Drucks führt dazu, dass diese Öffnungs- oder Selbsthaltestellung auch dann beibehalten wird, wenn der Druck in dem Versorgungszweig 98 abfällt. Gleichzeitig wird in der Öffnungs- oder Selbsthaltestellung des Selbsthalteventils 100 die Sperrstellung des Sperrventils 103 aufrecht erhalten.

In den Steuerzweig 99 gelangt die Druckluft bei geöffnetem Sperrventil 103 von der Verzweigung 82 durch den Steuerzweigabschnitt 83, der sich durch den Selbsthalteventilkörper 77 hindurch erstreckt und durch radiale Bohrungen 105 des Selbsthalteventilkörpers 77 sowie einen Ringspalt 106 zwischen dem Schließkörper 102 und dem Selbsthalteventilgehäuse 44 vorbei an dem Sperrventilsitz 84 zu dem Längskanal 82.

Die Funktion der einkreisigen Reifendruckventilbaugruppe 1a mit dem Reifendruckventil 2 gemäß Fig. 2 wird nun auf Grundlage der unterschiedlichen Betriebsstellungen gemäß Fig. 3 bis 5 erläutert.

Fig. 3 zeigt die Reifendruckventilbaugruppe 1a in der Sperrstellung, in der der Reifenanschluss 4 abgesperrt ist. Diese Sperrstellung nimmt die Reifendruckventilbaugruppe 1a an, wenn der Druck an dem Steuer- und Versorgungsanschluss 3 unterhalb eines ersten Schwellwertes liegt. In diesem Zustand liegt der Selbsthalteventilkörper 77 unter Abdichtung an dem Selbsthalteventilsitz 81 an, so dass die Druckluft ausschließlich über den Versorgungsteilzweig 78 in den Innenraum 52 des Anschlussgehäuses 43 gelangen kann. Das Rückschlagventil 76 ist geschlossen, was durch einen das Rückschlagventil 76 in die Schließstellung beaufschlagende Rückschlagventilfeder und/oder durch den auf der Ausgangsseite des Rückschlagventils anliegenden Druck gewährleistet sein kann. Das Sperrventil 103 ist in der Öffnungsstellung, so dass Druckluft von dem Steuer- und Versorgungskanal über die Verzweigung 82, den Steuerzweigabschnitt 83 und den Längskanal 62 der Steuerkammer 18 des Reifendruckventils 2 zugeführt werden kann. Der Druck in dem Steuerzweig 99 und damit an dem Steuereinlass 16 ist aber (auch infolge der Entlüftung über die Drossel 85) nicht ausreichend, um das Entlüftungsventil 6 zu öffnen. Auch der in der Ventilkammer 31 anliegende Druck ist nicht ausreichend, um das Überströmventil 5 zu öffnen.

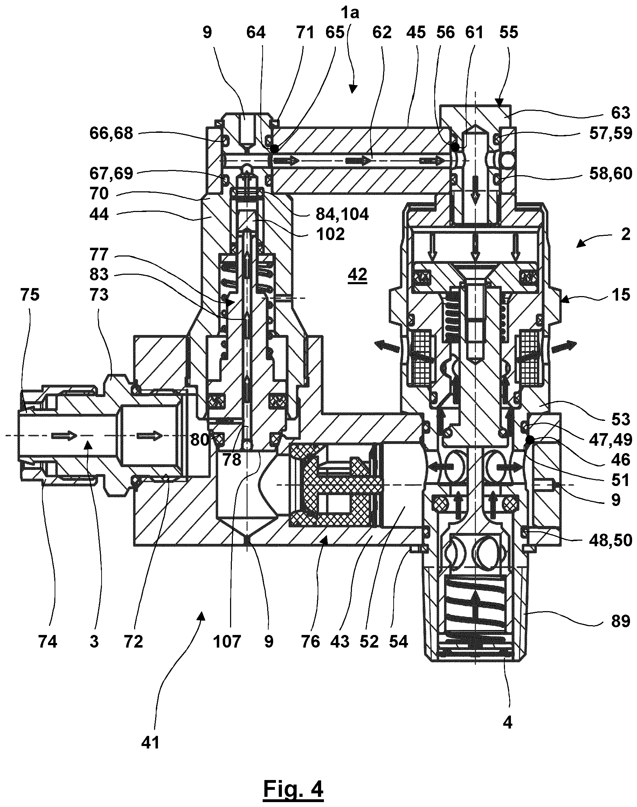

Wird der Druck an dem Steuer- und Versorgungsanschluss 3 so erhöht, dass dieser größer ist als der erste Schwellwert, aber kleiner als der zweite Schwellwert, erfolgt eine Umschaltung der Reifendruckventilbaugruppe aus der Sperrstellung gemäß Fig. 3 in die Entlüftungsstellung gemäß Fig. 4. In der Entlüftungsstellung befindet sich weiterhin das Selbsthalteventil 100 in der Schließstellung, womit das Sperrventil 103 in der Öffnungsstellung ist. Durch die Druckerhöhung in der Steuerkammer 18 kann der Steuerkolben 19 das Entlüftungsventil 6 in die Entlüftungsstellung überführen. Während dieser Öffnungsbewegung des Entlüftungsventils 6 verringert sich der Abstand 40 auf Null und über die Stirnseite des Entlüftungsventilkörpers 20 erfolgt die Übertragung einer Öffnungskraft auf den Fortsatz 39 des Überströmventilkörpers 33. Infolge dieser Öffnungskraft wird das Überströmventil 5 in die Öffnungsstellung überführt. Es kann somit die Entlüftung des Reifenanschlusses 4 über die Entlüftung 9 erfolgen. Das Rückschlagventil 76 ist hierbei abgesperrt.

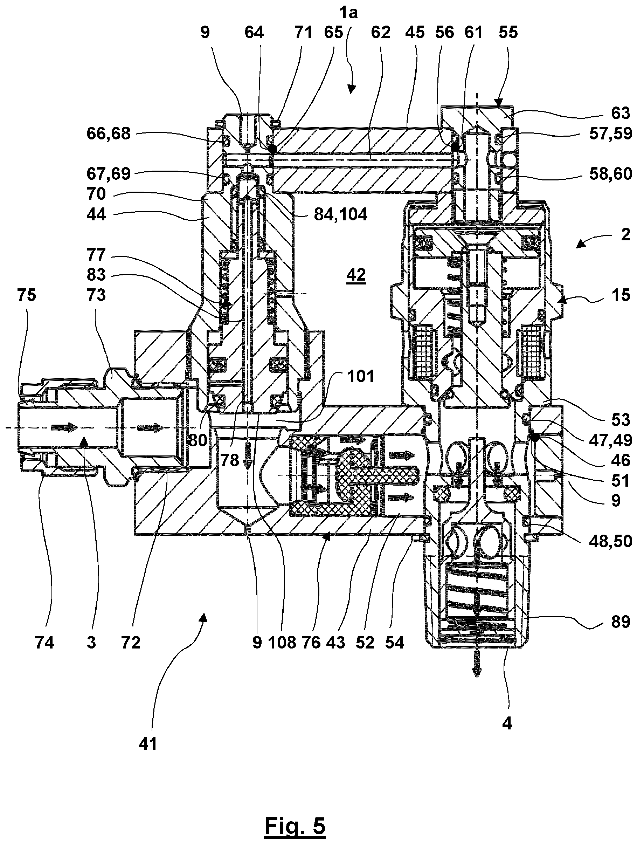

Wird der Druck an dem Steuer- und Versorgungsanschluss 3 so erhöht, dass dieser größer ist als ein zweiter Schwellwert, kommt es zu einer Öffnung des Rückschlagventils 76. Des weiteren führt der stirnseitig auf den Selbsthalteventilkörper 77 wirkenden Druck dazu, dass der Selbsthalteventilkörper 77 von dem Selbsthalteventilsitz 81 wegbewegt wird. Die Bewegung des Selbsthalteventilkörpers 77 weg von dem Selbsthalteventilsitz 81 führt gleichzeitig dazu, dass das Sperrventil 103 die Verbindung des Steuerzweigabschnitts 83 mit dem Längskanal 62 abgesperrt. Der Längskanal 62 ist über die Drossel 85 mit der Entlüftung 9 verbunden, so dass infolge der zuvor erläuterten Absperrung des Steuerzweigabschnitts 83 eine Entlüftung des Längskanals 62 und damit der Steuerkammer 18 erfolgt. Dies hat zur Folge, dass sich infolge der Beaufschlagung durch die Entlüftungsventilfeder 29 der Steuerkolben 19 so bewegt, dass das Entlüftungsventil 6 in seine Sperrstellung überführt wird. In der Betriebsstellung gemäß Fig. 5 kann Druckluft über den Bypassquerschnitt 101 zwischen dem Selbsthalteventilkörper 77 und dem Selbsthalteventilsitz 81 den Innenraum 52 mit der Öffnung des Rückschlagventils 76 durchströmen und über den Versorgungseinlass 32 und das geöffnete Überströmventil 5 zu dem Reifenanschluss 4 strömen.

Zu erkennen ist in den Figuren, dass die Steuerfläche 107/108, auf die der Druck stirnseitig auf den Selbsthalteventilkörper 77 wirkt, in der Schließstellung des Selbsthalteventilkörpers 77, in der dieser an dem Selbsthalteventilsitz 81 anliegt (Fig. 3 und 4) kleiner ist als in der Stellung des Selbsthalteventilkörpers 77, in der dieser beabstandet von dem Selbsthalteventilsitz 81 angeordnet ist (Fig. 5). Dies hat zur Folge, dass auch dann, wenn auf diese Stirnseite nach der Bewegung des Selbsthalteventilkörpers 77 in die Öffnungsstellung ein kleinerer Druck wirkt, diese Öffnungsstellung aufrecht erhalten bleibt, womit auch weiterhin eine Befüllung des Reifenanschlusses 4 erfolgen kann. Hiermit wird somit eine Selbsthaltefunktion herbeigeführt.

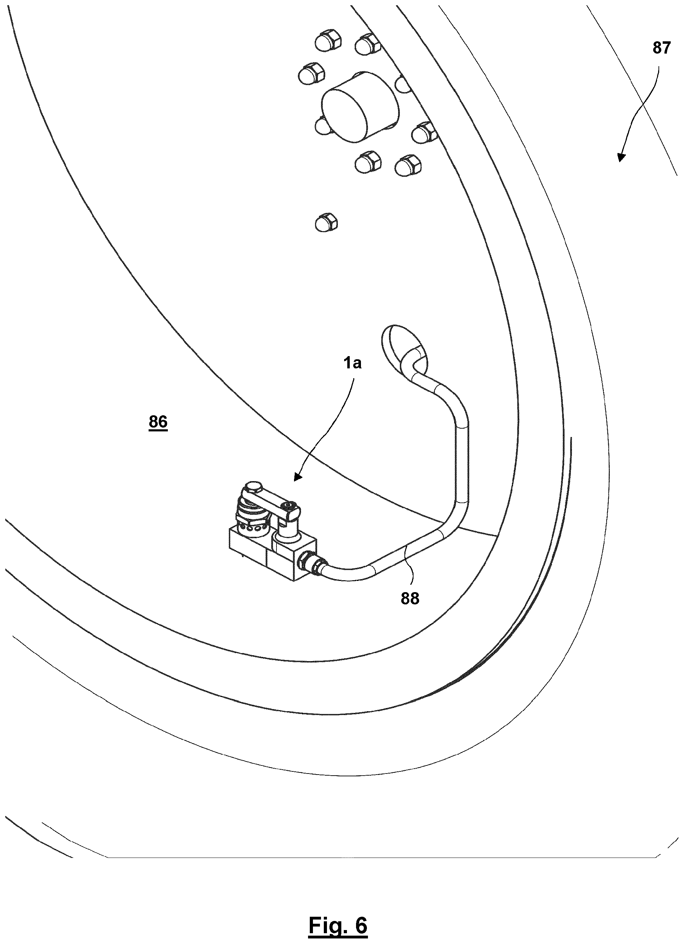

**Fig. 6** zeigt die Montage der Reifendruckventilbaugruppe 1a an eine Felge 86 eines Fahrzeugrades 87. Für diese einkreisige Ausgestaltung der Reifendruckventilbaugruppe 1a ist eine gemeinsame Steuer- und Versorgungsleitung 88 an den Steuer- und Versorgungsanschluss 3 angeschlossen. Möglich ist, dass das Gehäuse 15 des Reifendruckventils 2 im Bereich des Reifenanschlusses 4 eine Außengewinde 89 aufweist, mit dem das Reifendruckventil 2 und damit die Reifendruckventilbaugruppe 1a unmittelbar in ein Innengewinde der Felge 86 eingeschraubt ist.

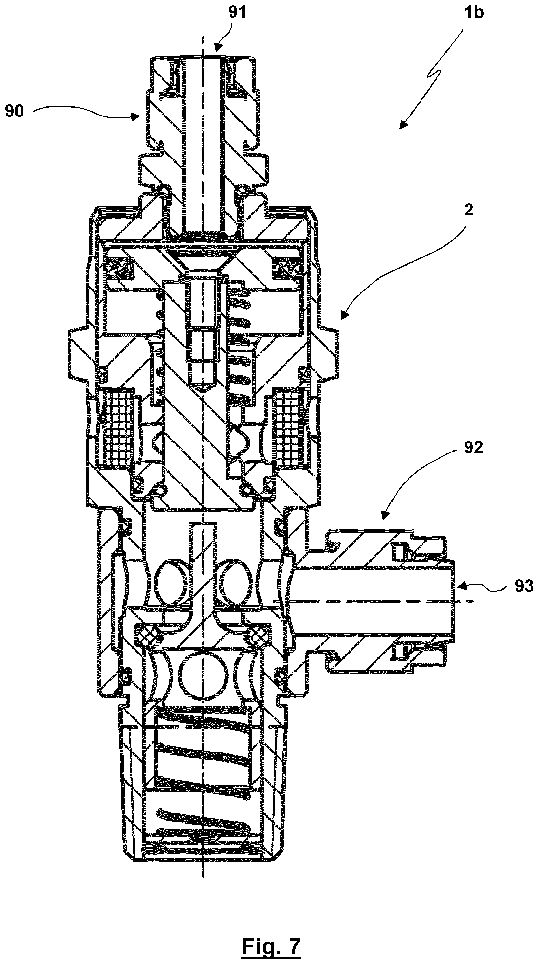

**Fig. 7** zeigt einen Einsatz desselben Reifendruckventils 2 in einer zweikreisigen Reifendruckventilbaugruppe 1b. In diesem Fall ist in das Anschlussgewinde 17 des Gehäusedeckels 27 ein Koppelgehäuse 90 eingeschraubt, welches abweichend zu dem Koppelgehäuse 55 ausgebildet ist: In diesem Fall verfügt das Koppelgehäuse unmittelbar über einen Steueranschluss 91. Auch ein Anschlussgehäuse 92, welches mit der Dicht- und Montagefläche 46 des Reifendruckventils 2 verbunden ist, ist abweichend zu dem Anschlussgehäuse 43 ausgebildet: In diesem Fall verfügt das Anschlussgehäuse 92 lediglich über einen Versorgungsanschluss 93.

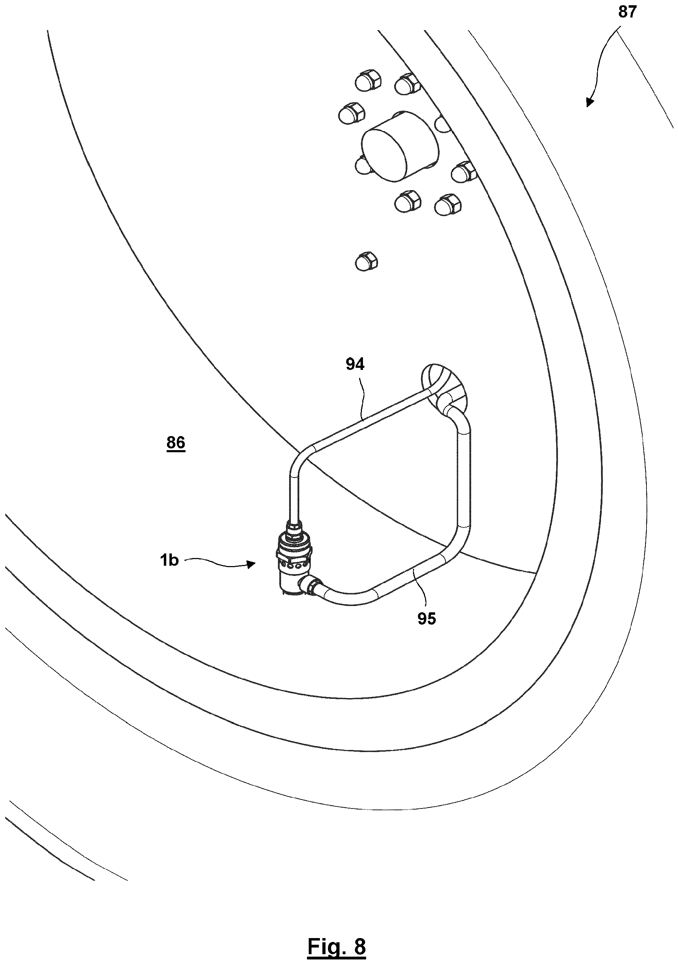

**Fig. 8** zeigt die Montage der zweikreisigen Reifendruckventilbaugruppe 1b gemäß Fig. 7 an einer Felge 86 eines Fahrzeugrades 87. An den Steueranschluss 91 ist eine Steuerleitung 94 angeschlossen, während an den Versorgungsanschluss 93 eine Versorgungsleitung 95 angeschlossen ist. Auch in diesem Fall kann die Reifendruckventilbaugruppe 1b über das Außengewinde 89 mit der Felge 86 verschraubt sein.

Möglich ist, dass das Gehäuse 15 im Bereich des Außengewindes 89 konisch ausgebildet ist. Bei dem Einschrauben des Außengewindes 89 kann ein Dichtmittel wie eine Dichtpaste verwendet werden.

Optional möglich ist, dass der Innenraum 52 eingangsseitig des Rückschlagventils 76 eine gedrosselte Entlüftung 9 aufweist. Diese gedrosselte Entlüftung kann zu einer Entlüftung genutzt werden, wenn das Rückschlagventil 76 in seiner Schließstellung eine unerwünschte Leckage aufweist.

Auch die Ventilkammer 31 kann mit einer gedrosselten Entlüftung 9 verbunden sein.

### BEZUGSZEICHENLISTE

- 1: Reifendruckventilbaugruppe
- 2: Reifendruckventil
- 3: Steuer- und Versorgungsanschluss
- 4: Reifenanschluss
- 5: Überströmventil
- 6: Entlüftungsventil
- 7: Überströmfunktion-Steuereinlass
- 8: Überströmventilfeder
- 9: Entlüftung
- 10: Drossel
- 11: Drossel
- 12: Steuereinlass
- 13: Entlüftungsventilfeder
- 14: Rückschlagventil
- 15: Gehäuse
- 16: Steuereinlass
- 17: Anschlussgewinde
- 18: Steuerraum
- 19: Steuerkolben
- 20: Entlüftungsventilkörper
- 21: Schraube
- 22: Gehäuseeinsatz
- 23: Absatz
- 24: Gehäuseteil
- 25: Gehäusedeckel
- 26: Entlüftungsventilteller
- 27: Dichtring
- 28: Entlüftungsventilsitz
- 29: Entlüftungsventilfeder
- 30: Entlüftungsschalldämpfer
- 31: Ventilkammer
- 32: Versorgungseinlass
- 33: Überströmventilkörper
- 34: Überströmventilfeder
- 35: Überströmventilteller
- 36: Überströmventilsitz
- 37: Dichtring
- 38: Führungshülse
- 39: Fortsatz
- 40: Abstand
- 41: Gehäusering
- 42: Durchgangsausnehmung
- 43: Anschlussgehäuse
- 44: Selbsthalteventilgehäuse
- 45: Anschlussgehäuse
- 46: Dicht- und Montagefläche
- 47: Nut
- 48: Nut
- 49: Dichtring
- 50: Dichtring
- 51: Dicht- und Montageauge
- 52: Innenraum
- 53: Absatz
- 54: Sicherungsring
- 55: Koppelgehäuse
- 56: Dicht- und Montagefläche
- 57: Nut
- 58: Nut
- 59: Dichtring
- 60: Dichtring
- 61: Dicht- und Montageauge
- 62: Längskanal
- 63: Erweiterung
- 64: Dicht- und Montageauge
- 65: Dicht- und Montagefläche
- 66: Nut
- 67: Nut
- 68: Dichtring
- 69: Dichtring
- 70: Absatz
- 71: Sicherungsring
- 72: Innengewinde
- 73: Anschlussstutzen
- 74: Schraubkappe
- 75: Klemmnase
- 76: Rückschlagventil
- 77: Selbsthalteventilkörper
- 78: Versorgungsteilzweig
- 79: Selbsthalteventilfeder
- 80: Dichtring
- 81: Selbsthalteventilsitz
- 82: Verzweigung
- 83: Steuerzweigabschnitt
- 84: Sperrventilsitz
- 85: Drossel
- 86: Felge
- 87: Fahrzeugrad
- 88: Steuer- und Versorgungsleitung
- 89: Aussengewinde
- 90: Koppelgehäuse
- 91: Steueranschluss
- 92: Anschlussgehäuse
- 93: Versorgungsanschluss
- 94: Steuerleitung
- 95: Versorgungsleitung
- 96: Querbohrung
- 97: Steuer- und Versorgungskanal
- 98: Versorgungszweig
- 99: Steuerzweig
- 100: Selbsthalteventil
- 101: Bypassquerschnitt
- 102: Schließkörper
- 103: Sperrventil
- 104: Dichtung
- 105: radiale Bohrung
- 106: Ringspalt

## Patentansprüche

1. Einkreisige Reifendruckventilbaugruppe (1) mit einem Steuer- und Versorgungskanal (97) und einem Reifendruckventil (2) mit einem Steuereinlass (16), der über eine Verzweigung (82) und einen Steuerzweig (99) mit dem Steuer- und Versorgungskanal (97) verbunden ist, einem Versorgungseinlass (32), der über die Verzweigung (82) und einen Versorgungszweig (98) mit dem Steuer- und Versorgungskanal (97) verbunden ist, einer Entlüftung (9) und einem Reifenanschluss (4), wobei
a) das Reifendruckventil (2) in einer ersten Schaltstellung den Reifenanschluss (4) sperrt,
b) das Reifendruckventil (2) in einer zweiten Schaltstellung den Reifenanschluss (4) mit der Entlüftung (9) verbindet,
c) das Reifendruckventil (2) in einer dritten Schaltstellung den Reifenanschluss (4) mit dem Versorgungseinlass (32) verbindet,
d) das Reifendruckventil (2) bei einem zumindest temporären Druck in dem Steuer- und Versorgungskanal (97),
- der kleiner ist als ein erster Schwellwert, die erste Schaltstellung einnimmt,
- der größer ist als der erste Schwellwert und kleiner ist als ein zweiter Schwellwert, von der ersten Schaltstellung in die zweite Schaltstellung überführt wird und
- der größer ist als der zweite Schwellwert, von der ersten Schaltstellung oder der zweiten Schaltstellung in die dritte Schaltstellung überführt wird,
**dadurch gekennzeichnet, dass**
ein Selbsthalteventil (100) vorhanden ist, welches eine passive Selbsthaltefunktion derart aufweist, dass nach Überführung des Reifendruckventils (2) in die dritte Schaltstellung die dritte Schaltstellung auch beibehalten wird, wenn der Druck an dem Steuer- und Versorgungskanal (97) temporär unter den zweiten Schwellwert fällt.

2. Reifendruckventilbaugruppe (1) nach Anspruch 1, **dadurch gekennzeichnet, dass** das Selbsthalteventil (100) einen Selbsthalteventilkörper (77) aufweist, der die passive Selbsthaltefunktion gewährleistet.

3. Reifendruckventilbaugruppe (1) nach Anspruch 2, **dadurch gekennzeichnet, dass** die Verzweigung (82) in den Selbsthalteventilkörper (77) integriert ist.

4. Reifendruckventilbaugruppe (1) nach Anspruch 2 oder 3, **dadurch gekennzeichnet, dass** der Selbsthalteventilkörper (77) mit einem Selbsthalteventilsitz (81) zusammenwirkt, wobei
a) in einer Schließstellung des Selbsthalteventils (100) der Selbsthalteventilkörper (77) an dem Selbsthalteventilsitz (81) anliegt und der Steuer- und Versorgungskanal (97) ausschließlich über einen durch den Selbsthalteventilkörper (77) verlaufenden Versorgungsteilzweig mit dem Versorgungseinlass (32) des Reifendruckventils (2) verbunden ist und
b) in einer Öffnungsstellung des Selbsthalteventils (100) der Selbsthalteventilkörper (77) und der Selbsthalteventilsitz (81) einen Bypassquerschnitt (101) ausbilden und der Steuer-und Versorgungskanal (97) sowohl über den durch den Selbsthalteventilkörper (77) verlaufenden Versorgungsteilzweig (78) als auch über den Bypassquerschnitt (101) mit dem Versorgungseinlass (32) des Reifendruckventils (2) verbunden ist.

5. Reifendruckventilbaugruppe (1) nach einem der Ansprüche 2 bis 4, **dadurch gekennzeichnet, dass** der an dem Steuer- und Versorgungskanal (97) anliegende Druck in einer Schließstellung des Selbsthalteventils (100) auf eine erste Steuerfläche (107) wirkt und in einer Öffnungsstellung des Selbsthalteventils (100) auf eine zweite Steuerfläche (108) wirkt, wobei die erste Steuerfläche (107) kleiner ist als die zweite Steuerfläche (108).

6. Reifendruckventilbaugruppe (1) nach einem der vorhergehenden Ansprüche, **dadurch gekennzeichnet, dass** Selbsthalteventil (100) sowohl mit einem Steuerzweig (99) als auch mit einem Versorgungszweig (98) verbunden ist,
wobei insbesondere der Steuerzweig (99) permanent über eine Drossel (85) mit einer Entlüftung (9) verbunden ist und in dem Steuerzweig (99)
- in einer Öffnungsstellung eines Sperrventils (103) über das Selbsthalteventil (100) dem Steuerzweig (99) ein Sperrventil-Volumenstrom zugeführt wird, der größer ist als der von dem Steuerzweig (99) über die Drossel (5) entlüftete Volumenstrom, wobei der dadurch in dem Steuerzweig (99) aufgebaute Druck zur Umschaltung des Reifendruckventils (2) in die zweite Schaltstellung beiträgt, und
- in einer Schließstellung des Sperrventils (103) der Sperrventil-Volumenstrom derart reduziert wird, dass der Sperrventil-Volumenstrom kleiner ist als der über die Drossel (85) entlüftete Volumenstrom, wobei der dadurch in dem Steuerzweig (99) reduzierte Druck zur Umschaltung des Reifendruckventils (2) in die dritte Schaltstellung beiträgt.

7. Reifendruckventilbaugruppe (1) nach Anspruch 6 in Rückbeziehung auf Anspruch 4, **dadurch gekennzeichnet, dass** der oder ein Selbsthalteventilkörper (77)
a) sowohl mit dem Selbsthalteventilsitz (81) des Selbsthalteventils (100) zur Sperrung und Freigabe des Bypassquerschnitts (101)
b) als auch mit einem Sperrventilsitz (84) des Sperrventils (103) des Steuerzweigs (99) in Wechselwirkung tritt.

8. Reifendruckventilbaugruppe (1) nach einem der vorhergehenden Ansprüche, **dadurch gekennzeichnet, dass** in dem Reifendruckventil (2)
a) der Entlüftung (9) ein Entlüftungsventil (6) vorgeordnet ist und
b) dem Reifenanschluss (4) ein Überströmventil (5) vorgeordnet ist,
c) wobei vorzugsweise Ventilkörper (20, 33) des Entlüftungsventils (6) und des Überströmventils (5) zumindest über einen Teilhub mechanisch miteinander gekoppelt sind.

9. Reifendruckventilbaugruppe (1) nach Anspruch 8, **dadurch gekennzeichnet, dass** in dem Reifendruckventil (4) der Entlüftungsventilkörper (20) des Entlüftungsventils (6) über einen Steuerkolben (19) betätigbar ist, der mit dem Steuerdruck an dem Steuereinlass (16) beaufschlagt ist, wobei vorzugsweise der Entlüftungsventilkörper (20) des Entlüftungsventils (6) entgegengesetzt zu der Wirkung des Steuerdrucks an dem Steuerkolben (19) von dem Druck auf der Eingangsseite des Überströmventils (5) beaufschlagt ist.

10. Reifendruckventilbaugruppe (1) nach Anspruch 9, **dadurch gekennzeichnet, dass**
a) das Reifendruckventil (2) ein Gehäuse (15) aufweist, welches den Steuereinlass (16), die Entlüftung (9), den Versorgungseinlass (32) und den Reifenanschluss (4) und eine Ventilkammer (31) aufweist,
b) wobei das Überströmventil (6) mit dem Überströmventilkörper (33) in dem Gehäuse (15) angeordnet ist,
c) das Überströmventil (6) in einer Sperrstellung des Überströmventilkörpers (33) die Ventilkammer (31) von dem Reifenanschluss (4) trennt und in einer Öffnungsstellung des Überströmventilkörpers (33) die Ventilkammer (31) mit dem Reifenanschluss (4) verbindet,
d) das Entlüftungsventil (6) mit dem Entlüftungsventilkörper (20) in dem Gehäuse (15) angeordnet ist, wobei das Entlüftungsventil (6) in einer Entlüftungsstellung des Entlüftungsventilkörpers (20) die Ventilkammer (31) mit der Entlüftung (9) verbindet und in einer Sperrstellung des Entlüftungsventilkörpers (20) die Ventilkammer (31) von der Entlüftung (9) trennt,
e) der Steuerkolben (19) in dem Gehäuse (15) angeordnet ist, wobei der Steuerkolben (19) mechanisch derart mit dem Überströmventilkörper (33) gekoppelt ist, dass in Abhängigkeit von dem Druck an dem Steuereinlass (16) und/oder dem Druck in der Ventilkammer (31) der Überströmventilkörper (33) aus der Sperrstellung in die Öffnungsstellung überführt werden kann.

11. Reifendruckventilbaugruppe (1) nach einem der vorhergehenden Ansprüche, **dadurch gekennzeichnet, dass** in dem Reifendruckventil (2) das Gehäuse (15) im Umgebungsbereich des Versorgungseinlasses (32) und/oder des Steuereinlasses (16) eine Dicht- und Montagefläche (46; 56) ausbildet, über die das Reifendruckregelventil (2) unter Abdichtung mit einem Dicht- und Montageauge (51; 61) eines Anschlussgehäuses (43; 45) montierbar ist.

12. Reifendruckventilbaugruppe (1) nach einem der vorhergehenden Ansprüche, **dadurch gekennzeichnet, dass** die Verzweigung (82), der Steuerzweig (99), der Versorgungszweig (98) und das Reifendruckventil (2) einen Gehäusering (41) bilden.

13. Reifendruckventilbaugruppe (1) nach einem der vorhergehenden Ansprüche, **dadurch gekennzeichnet, dass** in dem Versorgungszweig (98) ein in Richtung des Reifendruckventils (2) öffnendes Rückschlagventil (76) angeordnet ist.

14. Reifendruckventilbaugruppe (1) nach einem der vorhergehenden Ansprüche, **dadurch gekennzeichnet, dass**
a) eine Dicht- und Montagefläche (46) des Gehäuses (15) des Reifendruckventils (2) unter Abdichtung von einem Dicht- und Montageauge (51) eines Anschlussgehäuses (43) aufgenommen ist, durch welches sich der Versorgungszweig (98) erstreckt, und/oder
b) in ein Anschlussgewinde (17) des Steuereinlasses (16) ein Koppelgehäuse (55) eingeschraubt ist, welches eine Dicht- und Montagefläche (56) aufweist, die unter Abdichtung von einem Dicht- und Montageauge (61) eines Anschlussgehäuses (45) aufgenommen ist, wobei sich der Steuerzweig (99) durch das Anschlussgehäuse (45) und die Dicht- und Montagefläche (56) zu dem Steuereinlass (16) erstreckt,
wobei vorzugsweise das Anschlussgehäuse (45) zwei Dicht- und Montageaugen (61; 64) aufweist, die Teil des Steuerzweigs (99) sind, wobei die Dicht- und Montagefläche (56) des Koppelgehäuses (55) in einem ersten Dicht- und Montageauge (61) des Anschlussgehäuses (45) aufgenommen ist und in einem zweiten Dicht- und Montageauge (64) des Anschlussgehäuses (45) eine Dicht- und Montagefläche (65) eines Selbsthalteventilgehäuses (44) aufgenommen ist, welches das Selbsthalteventil (100) beinhaltet.

15. Gruppe mit Reifendruckventilbaugruppen (1a, 1b) mit
a) einer ersten Teilgruppe von Reifendruckventilbaugruppen (1a) nach einem der vorhergehenden Ansprüche, die einkreisig ausgebildet sind, und
b) einer zweiten Teilgruppe von Reifendruckventilbaugruppen (1b), die zweikreisig ausgebildet sind,
wobei die Reifendruckventilbaugruppen (1a) der ersten Teilgruppe und die Reifendruckventilbaugruppen (1b) der zweiten Teilgruppe baugleiche Reifendruckventile (2) aufweisen.

## Claims

1. Single circuit tire pressure valve assembly (1) comprising a control and supply channel (97) and a tire pressure valve (2) with a control inlet (16) which is connected via a branching (82) and a control branch (99) to the control and supply channel (97), with a supply inlet (32) which is connected via the branching (82) and a supply branch (98) to the control and supply channel (97), with a vent (9) and with a tire port (4), wherein
a) in a first switching position the tire pressure valve (2) closes the tire port (4),
b) in a second switching position the tire pressure valve (2) connects the tire port (4) to the vent (9),
c) in a third switching position the tire pressure valve (2) connects the tire port (4) to the supply inlet (32),
d) the tire pressure valve (2) for an at least temporary pressure in the control and supply channel (97)
- which is lower than a first threshold value is in the first switching position,
- which is higher than the first threshold value and lower than the second threshold value is transferred from the first switching position into the second switching position and
- which is higher than the second threshold value is transferred from the first switching position or from the second switching position into the third switching position,
**characterized in that**
a self holding valve (100) is provided which comprises a passive self holding function such that after transferring the tire pressure valve (2) into the third switching position the third switching position is upheld even if the pressure in the control and supply channel (97) temporarily falls below the second threshold value.

2. Tire pressure valve assembly (1) of claim 1, **characterized in that** the self holding valve (100) comprises a self holding valve body (77) which provides the passive self holding function.

3. Tire pressure valve assembly (1) of claim 2, **characterized in that** the branching (82) is integrated into the self holding valve body (77).

4. Tire pressure valve assembly (1) of claim 2 or 3, **characterized in that** the self holding valve body (77) cooperates with a self holding valve seat (81) wherein
a) in a closed position of the self holding valve (100) the self holding valve body (77) rests on the self holding valve seat (81) and the control and supply channel (97) is exclusively connected via a supply sub-branch to the supply inlet (32) of the tire pressure valve (2), the supply sub-branch extending through the self holding valve body (77), and
b) in an open position of the self holding valve (100) the self holding body (77) and the self holding valve seat (81) form a bypass cross section (101) and the control and supply channel (97) is connected both via the supply sub-branch (78) which extends through the self holding valve body (77) as well as via the bypass cross section (101) to the supply inlet (32) of the tire pressure valve (2).

5. Tire pressure valve assembly (1) of one of claims 2 to 4, **characterized in that** the pressure biasing the control and supply channel (97) biases a first control surface (107) in a closed position of the self holding valve (100) and biases a second control surface (108) in an open position of the self holding valve (100), the first control surface (107) being smaller than the second control surface (108).

6. Tire pressure valve assembly (1) of one of the preceding claims, **characterized in that** the self holding valve (100) is connected both to a control branch (99) as well as to a supply branch (98)
wherein in particular the control branch (99) is permanently connected via a throttle (85) to a vent and in the control branch (99)
- in an open position of a shut-off valve (103) a shut-off valve volumetric flow is transmitted via the self holding valve (100) to the control branch (99), the shut-off valve volumetric flow being higher than the volumetric flow which is vented from the control branch (99) via the throttle (5), the pressure build up in the control branch (99) in this way contributing to the switching of the tire pressure valve (2) into the second switching position, and
- in a closed position of the shut-off valve (103) the shut-off valve volumetric flow is reduced such that the shut-off valve volumetric flow is smaller than the volumetric flow vented via the throttle (85), the pressure reduced in the control branch (99) in this way contributing to the switching of the tire pressure valve (2) into the third switching position.

7. Tire pressure valve assembly (1) of claim 6 when referring back to claim 4, **characterized in that** the or a self holding valve body (77) interacts
a) both with the self holding valve seat (81) of the self holding valve (100) for shutting-of and opening the bypass cross section (101)
b) as well as with a shut-off valve seat (84) of the shut-off valve (103) of the control branch (99).

8. Tire pressure valve assembly (1) of one of the preceding claims, **characterized in that** in the tire pressure valve (2)
a) a venting valve (6) is arranged upstream from the vent (9) and
b) an overflow valve (5) is arranged upstream from the tire port (4),
c) wherein preferably valve bodies (20, 33) of the venting valve (6) and of the overflow valve (5) are mechanically coupled to each other at least over a part of the stroke.

9. Tire pressure valve assembly (1) of claim 8, **characterized in that** in the tire pressure valve (4) the venting valve body (20) of the venting valve (6) can be actuated by a control piston (19) which is biased by the control pressure at the control inlet (16), wherein preferably the venting valve body (20) of the venting valve (6) is biased by the pressure on the inlet side of the overflow valve (5) opposite to the effect of the control pressure on the control piston (19).

10. Tire pressure valve assembly (1) of claim 9, **characterized in that**
a) the tire pressure valve (2) comprises a housing (15) which comprises the control inlet (16), the vent (9), the supply inlet (32) and the tire port (4) and a valve chamber (31),
b) wherein the overflow valve (6) with the overflow valve body (33) is arranged in the housing (15),
c) the overflow valve (6) in a shut-off position of the overflow valve body (33) separates the valve chamber (31) from the tire port (4) and in an open position of the overflow valve body (33) connects the valve chamber (31) to the tire port (4),
d) the venting valve (6) with the venting valve body (20) is arranged in the housing (15), wherein in a venting position of the venting valve body (20) the venting valve (6) connects the valve chamber (31) to the vent (9) and in a shut-off position of the venting valve body (20) separates the valve chamber (31) from the vent (9),
e) the control piston (19) is arranged in the housing (15), wherein the control piston (19) is mechanically coupled to the overflow valve body (33) in a way such that dependent on the pressure at the control inlet (16) and/or on the pressure in the valve chamber (31) the overflow valve body (33) can be transferred from the shut-off position into the open position.

11. Tire pressure valve assembly (1) of one of the preceding claims, **characterized in that** in the tire pressure valve (2) the housing (15) forms a sealing and assembly surface (46; 56) in the neighbourhood of the supply inlet (32) and/or the control inlet (16) by which it is possible to assemble the tire pressure control valve (2) under the provision of a sealing effect to a sealing and assembly eye (51; 61) of a connection housing (43; 45).

12. Tire pressure valve assembly (1) of one of the preceding claims, **characterized in that** the branching (82), the control branch (99), the supply branch (98) and the tire pressure valve (2) form a housing ring (41).

13. Tire pressure valve assembly (1) of one of the preceding claims, **characterized in that** a check valve (76) is arranged in the supply branch (98) which opens towards the tire pressure valve (2).

14. Tire pressure valve assembly (1) of one of the preceding claims, **characterized in that**
a) a sealing and assembly surface (46) of the housing (15) of the tire pressure valve (2) is accommodated by a sealing and assembly eye (51) of a connection housing (43) under the provision of a sealing effect, the supply branch (98) extending through the connection housing (43), and/or
b) a coupling housing (55) can be screwed in a connecting thread (17) of the control inlet (61), the coupling housing comprising a sealing and assembly surface (56) which is accommodated under the provision of a sealing effect by a sealing and assembly eye (61) of a connection housing (45), the control branch (99) extending through the connection housing (45) and through the sealing and assembly surface (56) to the control inlet (16),
wherein preferably the connection housing (45) comprises two sealing and assembly eyes (61; 64) which are part of the control branch (99), wherein the sealing and assembly surface (56) of the coupling housing (55) is accommodated in a first sealing and assembly eye (61) of the connection housing (45) and a sealing and assembly surface (65) of a self holding valve housing (44) is accommodated in a second sealing and assembly eye (64) of the connection housing (45), the self holding valve housing (44) containing the self holding valve (100).

15. Group of tire pressure valve assemblies (1a, 1b) with
a) a first group part of tire pressure valve assemblies (1a) according to one of the preceding claims, which are embodied with one single circuit only and
b) a second group part of tire pressure valve assemblies (1b) which are embodies with two circuits,
wherein the tire pressure valve assemblies (1a) of the first group part and the tire pressure valve assemblies (1b) of the second group part comprise tire pressure valves (2) having the same constructions.

## Revendications

1. Ensemble de valve de pression de pneu mono-circuit (1) avec un canal de commande et d'alimentation (97) et une valve de pression de pneu (2) avec une entrée de commande (16), qui est reliée, par l'intermédiaire d'un embranchement (82) et d'une branche de commande (99), avec le canal de commande et d'alimentation (97), une entrée d'alimentation (32), qui est reliée, par l'intermédiaire de l'embranchement (82) et d'une branche d'alimentation (98), avec le canal de commande et d'alimentation (97), une ventilation (9) et un raccord de pneu (4), dans lequel
a) dans une première position de commutation, la valve de pression de pneu (2) bloque le raccord de pneu (4),
b) dans une deuxième position de commutation, la valve de pression de pneu (2) relie le raccord de pneu (4) avec la ventilation (9)
c) dans une troisième position de commutation, la valve de pression de pneu (2) relie le raccord de pneu (4) avec l'entrée d'alimentation (32),
d) la valve de pression de pneu (2), lors d'une pression au moins temporaire dans le canal de commande et d'alimentation (97),
- qui est inférieure à une première valeur seuil, prend la première position de commutation,
- qui est supérieure à la première valeur seuil et inférieure à une deuxième valeur seuil, passe de la première position de commutation à la deuxième position de commutation et
- qui est supérieure à la deuxième valeur seuil, passe de la première position de commutation ou de la deuxième position de commutation à la troisième position de commutation,
**caractérisé en ce que**
une valve autobloquante (100) est prévue, qui présente une fonction autobloquante passive, de sorte que, après le passage de la valve de pression de pneu (2) à la troisième position de commutation, la troisième position de commutation est maintenue même lorsque la pression au niveau du canal de commande et d'alimentation (97) tombe temporairement en dessous de la deuxième valeur seuil.

2. Ensemble de valve de pression de pneu (1) selon la revendication 1, **caractérisé en ce que** la valve autobloquante (100) comprend un corps de valve autobloquante (77) qui assure la fonction autobloquante passive.

3. Ensemble de valve de pression de pneu (1) selon la revendication 2, **caractérisé en ce que** l'embranchement (82) est intégré dans le corps de valve autobloquante (77).

4. Ensemble de valve de pression de pneu (1) selon la revendication 2 ou 3, **caractérisé en ce que** le corps de valve autobloquante (77) interagit avec un siège de valve autobloquante (81), dans lequel
a) dans une position de fermeture de la valve autobloquante (100), le corps de valve autobloquante (77) s'appuie contre le siège de valve autobloquante (81) et le canal de commande et d'alimentation (97) est relié, exclusivement par l'intermédiaire d'une branche de partie d'alimentation s'étendant à travers le corps de valve autobloquante (77), avec l'entrée d'alimentation (32) de la valve de pression de pneu (2) et
b) dans une position d'ouverture de la valve autobloquante (100), le corps de valve autobloquante (77) et le siège de valve autobloquante (81) forment une section transversale de dérivation (101) et le canal de commande et d'alimentation (97) est relié, aussi bien par l'intermédiaire de la branche de partie d'alimentation (78) s'étendant à travers le corps de valve autobloquante (77) que par l'intermédiaire de la section transversale de dérivation (101), avec l'entrée d'alimentation (32) de la valve de pression de pneu (2).

5. Ensemble de valve de pression de pneu (1) selon l'une des revendications 2 à 4, **caractérisé en ce que** la pression appliquée au canal de commande et d'alimentation (97) agit, dans une position de fermeture de la valve autobloquante (100), sur une première surface de commande (107) et, dans une position d'ouverture de la valve autobloquante (100), sur une deuxième surface de commande (108), dans lequel la première surface de commande (107) est plus petite que la deuxième surface de commande (108).

6. Ensemble de valve de pression de pneu (1) selon l'une des revendications précédentes, **caractérisé en ce que** la valve autobloquante (100) est reliée aussi bien avec une branche de commande (99) qu'avec une branche d'alimentation (98),
dans lequel, plus particulièrement, la branche de commande (99) est reliée, de manière permanente, par l'intermédiaire d'un étranglement (85), avec une ventilation (9) et, dans la branche de commande (99),
- dans une position d'ouverture d'une valve d'arrêt (103), par l'intermédiaire de la valve autobloquante (100), à la branche de commande (99), est ajouté un flux volumique de valve d'arrêt qui est supérieur au flux volumique ventilé par la branche de commande (99) par l'intermédiaire de l'étranglement (5), dans lequel la pression ainsi générée dans la branche de commande (99), contribue à la commutation de la valve de pression de pneu (2) vers la deuxième position de commutation et
- dans une position de fermeture de la valve d'arrêt (103), le flux volumique de valve de blocage est réduit, de sorte que le flux volumique de valve d'arrêt est inférieur au flux volumique ventilé par l'intermédiaire de l'étranglement (85), dans lequel la pression dans la branche de commande (99) ainsi réduite contribue à la commutation de la valve de pression de pneu (2) vers la troisième position de commutation.

7. Ensemble de valve de pression de pneu (1) selon la revendication 6, en référence à la revendication 4, **caractérisé en ce que** le ou un corps de valve autobloquante (77) interagit a) aussi bien avec le siège de valve autobloquante (81) de la valve autobloquante (100) pour le blocage et la libération de la section transversale de dérivation (101) b) qu'avec un siège de valve d'arrêt (84) de la valve d'arrêt (103) de la branche de commande (99).

8. Ensemble de valve de pression de pneu (1) selon l'une des revendications précédentes, **caractérisé en ce que**, dans la valve de pression de pneu (2),
a) une valve de ventilation (6) est disposée en amont de la ventilation (9) et
b) une valve de décharge (5) est disposée en amont du raccord de pneu (4),
c) dans lequel, de préférence, les corps de valves (20, 33) de la valve de ventilation (6) et de la valve de décharge (5) sont couplés entre eux mécaniquement au moins sur une course partielle.

9. Ensemble de valve de pression de pneu (1) selon la revendication 8, **caractérisé en ce que**, dans la valve de pression de pneu (4), le corps de valve de ventilation (20) de la valve de ventilation (6) peut être actionné par l'intermédiaire d'un piston de commande (19) qui est sollicité par la pression de commande au niveau de l'entrée de commande (16), dans lequel, de préférence, le corps de valve de ventilation (20) de la valve de ventilation (6) est sollicité, dans le sens inverse de l'action de la pression de commande au niveau du piston de commande (19), par la pression sur le côté d'entrée de la valve de décharge (5).

10. Ensemble de valve de pression de pneu (1) selon la revendication 9, **caractérisé en ce que**
a) la valve de pression de pneu (2) comprend un boîtier (15) qui comprend l'entrée de commande (16), la ventilation (9), l'entrée d'alimentation (32) et le raccord de pneu (4) et une chambre de valve (31),
b) dans lequel la valve de décharge (6), avec le corps de valve de décharge (33), est disposée dans le boîtier (15),
c) dans une position d'arrêt du corps de valve de décharge (33), la valve de décharge (6) sépare la chambre de valve (31) du raccord de pneu (4) et, dans une position d'ouverture du corps de valve de décharge (33), relie la chambre de valve (31) avec le raccord de pneu (4),
d) la valve de ventilation (6), avec le corps de valve de ventilation (20), est disposée dans le boîtier (15), dans lequel, dans une position de ventilation du corps de valve de ventilation (20), la valve de ventilation (6) relie la chambre de valve (31) avec la ventilation (9) et, dans une position d'arrêt du corps de valve de ventilation (20), sépare la chambre de valve (31) de la ventilation (9),
e) le piston de commande (19) est disposé dans le boîtier (15), dans lequel le piston de commande (19) est couplé mécaniquement avec le corps de valve de décharge (33) de sorte que, en fonction de la pression au niveau de l'entrée de commande (16) et/ou de la pression dans la chambre de valve (31), le corps de valve de décharge (33) peut passer de la position d'arrêt à la position d'ouverture.

11. Ensemble de valve de pression de pneu (1) selon l'une des revendications précédentes, **caractérisé en ce que**, dans la valve de pression de pneu (2), le boîtier (15) forme, dans la zone environnant l'entrée d'alimentation (32) et/ou l'entrée de commande (16), une surface d'étanchéité et de montage (46 ; 56) par l'intermédiaire de laquelle la valve de régulation de pression de pneu (2) peut être montée avec étanchéité avec un oeillet d'étanchéité et de montage (51 ; 61) d'un boîtier de raccordement (43 ; 45).

12. Ensemble de valve de pression de pneu (1) selon l'une des revendications précédentes, **caractérisé en ce que** l'embranchement (82), la branche de commande (99), la branche d'alimentation (98) et la valve de pression de pneu (2) forment une bague de boîtier (41).

13. Ensemble de valve de pression de pneu (1) selon l'une des revendications précédentes, **caractérisé en ce que**, dans la branche d'alimentation (98), est disposé un clapet anti-retour (76) s'ouvrant en direction de la valve de pression de pneu (2).

14. Ensemble de valve de pression de pneu (1) selon l'une des revendications précédentes, **caractérisé en ce que**
a) une surface d'étanchéité et de montage (46) du boîtier (15) de la valve de pression de pneu (2) est logée, avec étanchéité, par un oeillet d'étanchéité et de montage (51) d'un boîtier de raccordement (43), à travers lequel la branche d'alimentation (98) s'étend et/ou
b) dans un filetage de raccordement (17) de l'entrée de commande (16), est vissé un boîtier de couplage (55) qui présente une surface d'étanchéité et de montage (56) qui est logée, avec étanchéité, par un oeillet d'étanchéité et de montage (61) d'un boîtier de raccordement (45), dans lequel la branche de commande (99) s'étend à travers le boîtier de raccordement (45) et la surface d'étanchéité et de montage (56) vers l'entrée de commande (16),
dans lequel, de préférence, le boîtier de raccordement (45) présente deux oeillets d'étanchéité et de montage (61 ; 64) qui font partie de la branche de commande (99), dans lequel la surface d'étanchéité et de montage (56) du boîtier de couplage (55) est logée dans un premier oeillet d'étanchéité et de montage (61) du boîtier de raccordement (45) et, dans un deuxième oeillet d'étanchéité et de montage (64) du boîtier de raccordement (45), est logée une surface d'étanchéité et de montage (65) d'un boîtier de valve autobloquante (44) qui contient la valve autobloquante (100).

15. Groupe avec ensembles de valves de pression de pneus (1a, 1b) avec
a) un premier groupe partiel d'ensembles de valves de pression de pneus (1a) selon l'une des revendications précédentes, qui comprennent un seul circuit et
b) un deuxième groupe partiel d'ensembles de valves de pression de pneus (1b), qui comprennent deux circuits,
dans lequel les ensembles de valves de pression de pneus (1a) du premier groupe partiel et les ensembles de valves de pression de pneus (1b) du deuxième groupe partiel présentent des valves de pression de pneus (2) identiques.
